# EUROPEAN PATENT SPECIFICATION

(11) **EP 4 351 184 B1**
(45) Date of publication and mention of the grant of the patent: **04.11.2026**
(21) Application number: 22883718.3
(22) Date of filing: 07.07.2022
(51) Int. Cl.: H04W 4/80, H04W 36/32, G01S 13/02, H04W 4/02, H04W 4/029, H04W 4/48, H04W 88/06, G01S 13/76, G01S 7/00

(54) **PORTABLE ELECTRONIC DEVICE FOR PROVIDING POSITIONING COMMUNICATION THROUGH UWB COMMUNICATION CHANNEL**
TRAGBARE ELEKTRONISCHE VORRICHTUNG ZUR BEREITSTELLUNG VON POSITIONIERUNGSKOMMUNIKATION ÜBER UWB-KOMMUNIKATIONSKANAL
DISPOSITIF ÉLECTRONIQUE PORTABLE CONÇU POUR EFFECTUER UNE COMMUNICATION DE POSITIONNEMENT PAR L'INTERMÉDIAIRE D'UN CANAL DE COMMUNICATION UWB

(30) Priority: 18.10.2021 KR 20210138065; 17.03.2022 KR 20220033295
(43) Date of publication of application: 10.04.2024
(73) Proprietor: Samsung Electronics Co., Ltd., Suwon-si, Gyeonggi-do 16677 (KR)
(72) Inventor: KANG, Moonseok, Suwon-si, Gyeonggi-do 16677 (KR); YANG, Yi, Suwon-si, Gyeonggi-do 16677 (KR); KIM, Hyunchul, Suwon-si, Gyeonggi-do 16677 (KR); JANG, Jonghoon, Suwon-si, Gyeonggi-do 16677 (KR)
(74) Representative: HGF
(86) International application number: PCT/KR2022/009823
(87) International publication number: WO 2023/068488

(56) References cited:
- WO-A1-2019/225431
- WO-A1-2020/189875
- CN-A- 112 291 704
- CN-U- 207 458 352
- KR-A- 20170 104 907
- KR-A- 20200 005 973
- KR-A- 20200 049 269
- KR-A- 20200 138 511
- US-A1- 2008 227 434
- US-A1- 2017 126 273

## Description

### [Technical Field]

The disclosure relates to a ultra wide band (UWB) communication technology used for positioning or localization, for example measuring a location and/or a distance.

### [Background Art]

A global positioning system (GPS) may be used for a navigation, or way-finding, system that measures a location of a portable electronic device and guides the way to predetermined destination from the measured location, or for a location tracking system that tracks the location of the portable electronic device. However, when the portable electronic device is located in a place having difficulty in receiving a GPS signal, such as a place between skyscrapers, an alley, a basement, or a parking lot, the navigation or location tracking using the GPS may be inaccurate. In such a place, a positioning technology using UWB communication may be used for the systems.

For example, the portable electronic device of the user may acquire location information of the portable electronic device through UWB communication, or UWB ranging with anchors supporting positioning. The portable electronic device may use a downlink time difference of arrival (TDoA) or uplink TDoA scheme in order to acquire location information.

In the uplink TDoA scheme, the portable electronic device may transmit a UWB signal to anchors. The anchors may transmit time information, for example a timestamp, of the received UWB signal to a positioning server. The positioning server may measure the location of the user on the basis of time information received from anchors and location information for the known anchors and transmit the location information of the user to the portable electronic device.

In the downlink TDoA scheme, each of the anchors may transmit a UWB signal to the portable electronic device. The portable electronic device may record time information for the received UWB signals and measure the location of the user on the basis of the recorded time information and the location information of the known anchors.

WO 2020/189875 A1 discusses an electronic device which includes an ultra-wideband communication circuit, a processor operatively connected to the UWB circuit, and a memory operatively connected to the processor. US 2008/227434 A1 discusses a mobile internet terminal UE. US 2017/126273 A1 discusses a location measuring method performed among an access point and a plurality of UWB tags.

### [Disclosure of Invention]

### [Technical Problem]

When a portable electronic device of a user is located within a vehicle such as a car, a metal structure in the vehicle may act as shielding that blocks UWB communication, and accordingly, the performance of UWB communication may deteriorate and it may be difficult to guide the way of track the location.

Various embodiments of the disclosure may provide an electronic device capable of accurately measuring the location of the user without disruptions of the metal structure in the vehicle by determining a target to perform data communication for positioning among a UWB communication circuit included in the electronic device and a UWB communication circuit installed in the vehicle on the basis of whether the portable electronic device of the user is located within the vehicle or is close thereto.

### [Solution to Problem]

The scope of protection of the present invention is defined by the appended independent claims. Optional features are specified by the dependent claims.

### [Advantageous Effects of invention]

According to various embodiments, an electronic device can accurately measure the location of the user without disruptions of the metal structure in the vehicle by determining a target to perform data communication for positioning among a UWB communication circuit external electronic device to perform a second UWB communication with the plurality of first external electronic devices.

The processor may be further configured to: detect a second event corresponding to a resumption of the first UWB communication while the second UWB communication is performed, and based on the second event, transmit a message requesting termination of the second UWB communication to the second external electronic device using the second wireless communication circuit, and resume the first UWB communication.

The second wireless communication circuit may include a BLUETOOTH low energy (BLE) communication circuit, and the processor may be further configured to: establish a connection between the electronic device and the second external electronic device using the BLE communication circuit, detect the first event based on the establishing of the connection , and detect the second event based on a termination of the connection.

The processor may be further configured to: measure a strength of a radio frequency (RF) signal received from the second external electronic device through the second wireless communication circuit to obtain a signal strength value, based on the signal strength value being smaller than a predetermined reference value, detect the first event, and based on the signal strength value being larger than the predetermined reference value while the second UWB communication is performed, detect the second event.

The processor may be further configured to measure a strength of a radio frequency (RF) signal received from the second wireless communication circuit to obtain a signal strength value, recognize a trend corresponding to a distance between the second external electronic device and the electronic device, based on a change in the signal strength value, based on the trend being a decreasing trend, detect the first event, and based on the trend being an increasing trend, detect the second event.

The processor may be further configured to receive UWB signals from the plurality of first external electronic devices through the first UWB communication, and determine a location of the electronic device, based on a time point at which the UWB signals are received and geographical location information of the plurality of first external electronic devices.

The processor may be further configured to: receive time point information indicating a time point at which the second external electronic device received UWB signals from the second external electronic device through the second wireless communication circuit while the second UWB communication is performed, and determine a location of the second external electronic device, based on the time point information and geographical location information of the plurality of first external electronic devices.

The processor may be further configured to receive location information of the second external electronic device from the second external electronic device through the second wireless communication circuit while the second UWB communication is performed.

The memory may be further configured to store an application, a service module, and UWB firmware. The processor may be further configured to execute the application to make a request for positioning communication to the UWB firmware through the service module, execute the UWB firmware to: based on the request, configure a state of a channel for the first UWB communication as an active state to perform the first UWB communication using the first wireless communication circuit, and to transmit a message indicating that the state of the channel is configured as the active state to the application. The processor may be further configured to execute the service module to: based on the first event, allow the UWB firmware to switch the state of the channel to an idle state by transmitting a message requesting termination of the first UWB communication to the UWB firmware, instruct the UWB firmware to not inform the application of the switching of the state of the channel to the idle state, and transmit a message requesting initiation of the second UWB communication to the second external electronic device using the second wireless communication circuit. The processor may be further configured to execute the service module to: based on the second event, allow the UWB firmware to switch the state of the channel to the active state by transmitting a message requesting resumption of the first UWB communication to the UWB firmware, and transmit the message requesting termination of the second UWB communication to the second external electronic device through the second wireless communication circuit.

Based on the first UWB communication channel being established, the processor may be further configured to insert information received from the plurality of first external electronic devices into the communication information and transmit the communication information to the second external electronic device.

In accordance with an aspect of the disclosure, an electronic device includes a first wireless communication circuit configured to be used for ultra wide band (UWB) communication; a second wireless communication circuit configured to be used for wireless communication different from the UWB communication; a memory configured to store instructions; and a processor. The processor is configured to execute the instructions to: perform first UWB communication for position detection through a first UWB communication channel with a plurality of first external electronic devices using the first wireless communication circuit while the first UWB communication is performed, detect a third event corresponding to a start of a second UWB communication for the position detection between the plurality of first external electronic devices and a second external electronic device, and based on the third event, transmit information used by the second external electronic device for the second UWB communication with the plurality of first external electronic devices to the second external electronic device through the second wireless communication circuit.

The processor may be further configured to: detect a fourth event corresponding to a termination of the second UWB communication by the second external electronic device, and based on the fourth event, transmit a message requesting the termination of the second UWB communication to the second external electronic device through the second wireless communication circuit.

The second external electronic device may be installed in an autonomous vehicle, and the processor may be further configured to: detect the third event based on a user input calling the autonomous vehicle through an input device of the electronic device, and detect the fourth event based on receiving a predetermined signal from the second external electronic device.

The second external electronic device may be installed in an autonomous vehicle, and wherein the processor may be further configured to: detect the third event based on receiving a user input calling the autonomous vehicle through an input device of the electronic device, measure a strength of a radio-frequency (RF) signal received from the second external electronic device using the second wireless communication circuit to obtain a signal strength value, and detect the fourth event based on the signal strength value being smaller than a predetermined reference value.

The processor may be further configured to: receive UWB signals from the plurality of first external electronic devices through the first UWB communication, determine a location of the electronic device, based on a time point at which the UWB signals are received and geographical location information of the plurality of first external electronic devices, and instruct the autonomous vehicle to drive to the location of the electronic device by transmitting location information corresponding to the determined location to the second external electronic device using the second wireless communication circuit.

In accordance with an aspect of the disclosure, a method of operating an electronic device includes performing first ultra wide band (UWB) communication for position detection through a first UWB communication channel with a plurality of first external electronic devices using a first wireless communication circuit, detecting a first event corresponding to a handover of the position detection to a second external electronic device while the first UWB communication is performed; and based on the first event, stopping the position detection through the first UWB communication channel, and transmitting communication information to the second external electronic device using a second wireless communication circuit configured to perform wireless communication different from the first UWB communication, wherein the communication information is used by the second external electronic device to perform a second UWB communication with the plurality of first external electronic devices.

The method may further include detecting a second event corresponding to a resumption of the first UWB communication while the second UWB communication is performed in the second external electronic device; and based on the second event, transmitting a message requesting termination of the second UWB communication to the second external electronic device using the second wireless communication circuit and resuming the first UWB communication.

In accordance with an aspect of the disclosure, a method of operating an electronic device includes detecting a third event corresponding to a start of a second ultra wide band (UWB) communication for position detection between a plurality of first external electronic devices and a second external electronic device while the electronic device performs first UWB communication for the position detection with the plurality of first external electronic devices through a first wireless communication circuit configured to perform UWB communication; and based on the third event, transmitting communication information to the second external electronic device using a second wireless communication circuit configured to perform wireless communication different from the UWB communication, wherein the communication information is used by the second external electronic device for the second UWB communication with the plurality of first external electronic devices .

The method may further include detecting a fourth event corresponding to a termination of the second UWB communication; and based on the fourth event, transmitting a message requesting the termination of the second UWB communication to the second external electronic device using the second wireless communication circuit.

In accordance with an aspect of the disclosure, an electronic device includes a first wireless communication circuit configured to communicate using an ultra wide band (UWB) bandwidth; a second wireless communication circuit configured to communicate using a bandwidth different from the UWB bandwidth; and a processor configured to: control the first wireless communication circuit to perform first UWB communication with a plurality of first external electronic devices, determine a first location of the electronic device based on the first UWB communication, based on detecting a first event while the first UWB communication is performed, control the second wireless communication circuit to transmit communication information to a second external electronic device, wherein the communication information is used by the second external electronic device to perform a second UWB communication with the plurality of first external electronic devices, and determine a second location of the electronic device based on the second UWB communication between the second external electronic device and the plurality of first external electronic devices.

The processor may be further configured to: based detecting a second event, transmit a message requesting termination of the second UWB communication to the second external electronic device using the second wireless communication circuit, resume the first UWB communication with the plurality of first external electronic devices, and determine a third location of the electronic device based on the resumed first UWB communication.

### [Advantageous Effects of invention]

According to various embodiments, an electronic device can accurately measure the location of the user without disruptions of the metal structure in the vehicle by determining a target to perform data communication for positioning among a UWB communication circuit included in the electronic device and a UWB communication circuit installed in the vehicle on the basis of whether the portable electronic device of the user is located within the vehicle or is close thereto.

Further, various effects directly or indirectly detected through the disclosure can be provided.

### [Brief Description of Drawings]

FIG. 1 is a block diagram illustrating an electronic device within a network environment according to an embodiment.
FIG. 2 is a block diagram illustrating a portable electronic device in a positioning system according to an embodiment.
FIGs. 3, 4, and 5 illustrate a state switching process of a wireless communication channel established in the positioning system of FIG. 2 according to an embodiment.
FIG. 6 is a flowchart illustrating a positioning communication method of an uplink TDoA scheme in the positioning information according to an embodiment.
FIG. 7 is a flowchart illustrating a positioning communication method of a downlink TDoA scheme in the positioning system according to an embodiment.
FIG. 8 is a flowchart illustrating a positioning communication method of the downlink TDoA scheme in the positioning system according to an embodiment.
FIG. 9 is a flowchart illustrating a positioning communication method of the downlink TDoA scheme in the positioning system according to an embodiment.
FIG. 10 is a flowchart illustrating operations of the processor 299 in the portable electronic device 200 according to an embodiment.

### [Mode for the Invention]

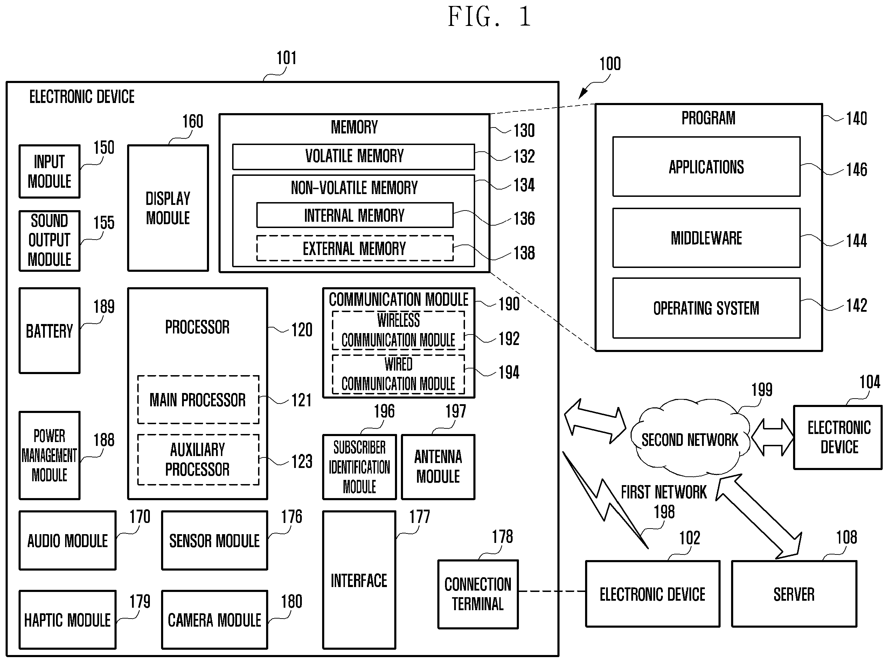

Fig. 1 is a block diagram illustrating an electronic device 101 in a network environment 100 according to an embodiment. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

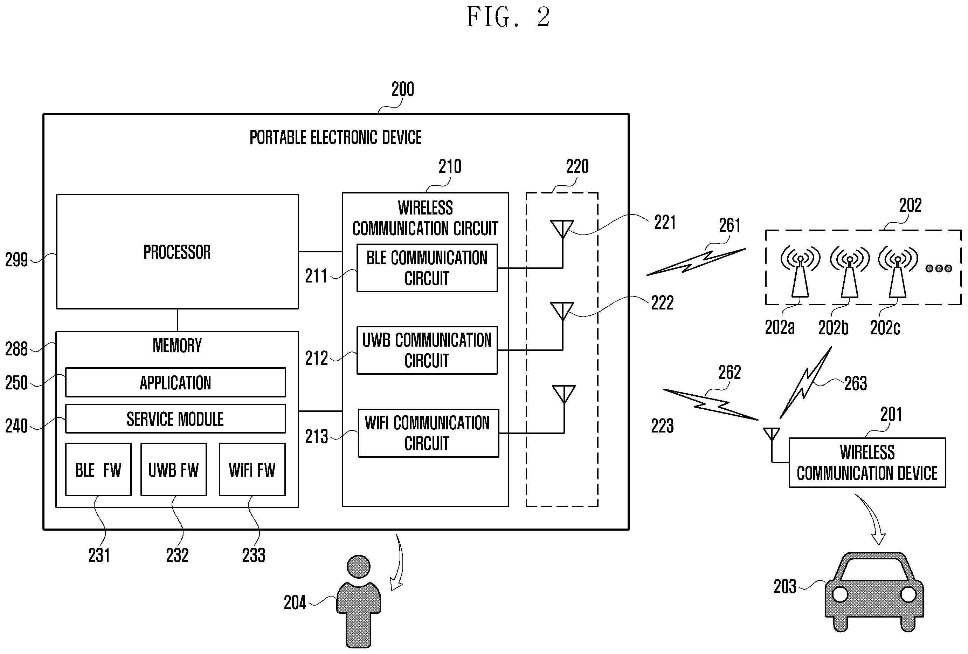

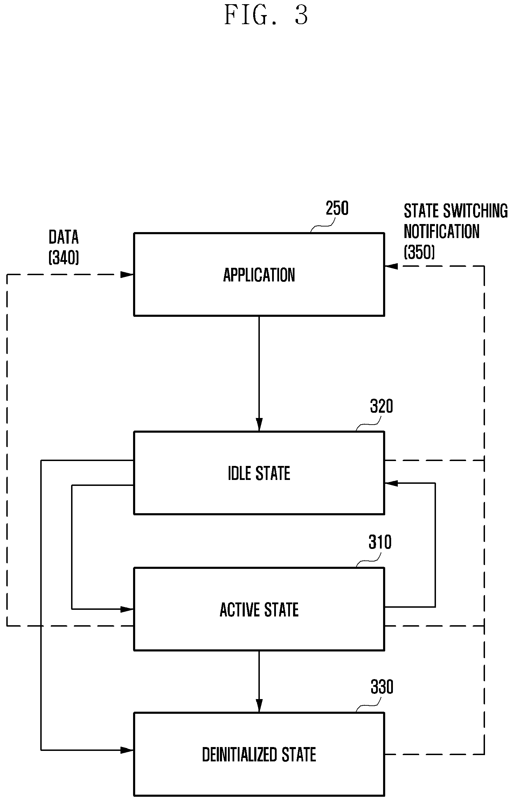

FIG. 2 is a block diagram illustrating a portable electronic device 200 in a positioning system according to an embodiment. The portable electronic device 200 may be, for example, a user portable device. FIGs. 3, 4, and 5 illustrate a state switching process of a wireless communication channel established in the positioning system of FIG. 2 according to an embodiment.

Referring to FIG. 2, a portable electronic device 200 (for example, the electronic device 101 of FIG. 1) may include a wireless communication circuit 210, an antenna module 220, a memory 288, and a processor 299. The elements of the portable electronic device 200 may be operatively or electrically connected to each other.

The wireless communication circuit 210 (for example, the wireless communication module 192 of FIG. 1) may include a BLUETOOTH low energy (BLE) communication circuit 211, a UWB communication circuit 212, or a WiFi communication circuit 213.

The antenna module 220 may include a plurality of antennas including a BLE antenna 221 connected to the BLE communication circuit 211, a UWB antenna 222 connected to the UWB communication circuit 212, and a WiFi antenna 223 connected to the WiFi communication circuit 213. According to an embodiment, a function of at least one of the BLE communication circuit 211, the UWB communication circuit 212, or the WiFi communication circuit 213 may be controlled by the processor 299. In embodiments, the processor 299 may be, for example, an application processor and/or a communication processor. Some communication circuits among the communication circuits 211, 212, and 213 may use one antenna in common. For example, the BLE communication circuit 211 and the WiFi communication circuit 213 may perform data communication using one antenna in common.

The memory 288 (for example, the memory 130 of FIG. 1) may include a BLE FW 231, a UWB FW 232, a WiFi FW 233, a service module 240, and an application 250. For example, the FWs 231 to 233, service module 240, and application 250 may be stored in the memory 288 as instructions and may be executed by the processor 299. At least one of the FWs 231 to 233, service module 240, and application 250 may be executed by a processor (for example, the auxiliary processor 123 of FIG. 1) which may be specialized for wireless communication for measuring the location and/or the distance.

The BLE FW 231 may control the BLE communication circuit 211 to establish a BLE communication channel (or BLE session) between the portable electronic device 200 and an external electronic device. In embodiments, the external electronic device may include, a wireless communication device 201 installed in a vehicle 203, or anchors 202, which may include for example anchor 202a, anchor 202b, and anchor 202c. In embodiments, the vehicle 203 may be, for example, a car, a van, a truck, a sports utility vehicle, or any other type of vehice, for example an airplane, a helicopter, a boat, or a ship. The UWB FW 232 may control the UWB communication circuit 212 to establish a UWB communication channel between the portable electronic device 200 and the external electronic device. The WiFi FW 233 may control the WiFi communication circuit 213 to establish a WiFi communication channel between the portable electronic device 200 and the external electronic device. In an embodiment, the BLE FW 231 and the BLE communication circuit 211 may be implemented as a single chipset. In an embodiment, the UWB FW 232 and the UWB communication circuit 212 may be implemented as a single chipset. In an embodiment, the WiFi FW 233 and the WiFi communication circuit 213 may be implemented as a single chipset.

The service module 240 (for example, the operating system 142 and/or the middleware 144 of FIG. 1) may provide a service required for performing the given operation by the application 250 to the application 250. For example, the service module 240 may receive data used for measuring the location of the portable electronic device 200. In embodiments, the data used for measuring the location of the portable electronic device 200 may include a timestamp indicating a time point at which the UWB communication circuit 212 receives a UWB signal or identification information of the external electronic device transmitting the UWB signal. In embodiments, the service module 240 may receive data used for measuring the distance between the portable electronic device 200 and the external electronic device (for example, the wireless communication device 201). In embodiments, the data used for measuring the distance between the portable electronic device 200 and the external electronic device may include information indicating the strength of the UWB signal received from the external electronic device. In embodiments, one or more of the data used for measuring the location of the portable electronic device 200 and the data used for measuring the distance between the portable electronic device 200 and the external electronic device may be received by the service module 240 from at least one of the FWs 231 to 233, and the service module 240 may provide the received data to the application 250.

The application 250 (for example, the application 146 of FIG. 1) may perform an operation (for example, location measurement, distance measurement, navigation, or location tracking) on the basis of the service provided by the service module 240 and/or the data provided from the FWs 231 to 233 through the service module 240.

Referring to FIG. 3, the application 250 may manage the state of the established wireless communication channel as an active state 310, an idle state 320, which may be for example an inactive state, or a deinitialized state 330. A target of which the state is managed may include a channel (for example, UWB ranging session) established to transmit or receive data used for positioning the portable electronic device 200 to or from the external electronic device. The application 250 may manage the state of the wireless communication channel through an application programming interface (API) provided by the service module 240. For example, the application 250 may configure the state of the wireless communication channel as the idle state 320 through openSession() API. The application 250 may switch the state of the wireless communication channel from the idle state 320 to the active state 310 through rangingStop() API. In the active state 310, the corresponding FW (for example, the UWB FW 232) may perform data communication with the external electronic device (for example, the wireless communication device 201 or the anchors 202) through the wireless communication channel established by the corresponding wireless communication circuit (for example, the UWB communication circuit 212). In the active state 310, the FW may transmit data 340 received from the external electronic device to the application 250 through the wireless communication channel. The application 250 may switch the state of the wireless communication channel from the active state 310 to the idle state 320 through rangingStop() API. When the active state 310 switches to the idle state 320, the corresponding FW may stop data communication. The application 250 may switch the state of the wireless communication channel from the active state 310 or the idle state 320 to the deinitialized state 330 through closeSession() API. When the active state 310 or the idle state 320 switches to the deinitialized state 330, the FW may control the corresponding wireless communication circuit to deinitialize the established wireless communication channel. The FWs 231 to 233 may transmit a state switching notification indicating the state switching to the application 250. For example, the FWs 231 to 233 may inform the application 250 of the state switching through onSessionStatusChanged() API provided from the service module 240.

According to an embodiment, when a predetermined first event is generated while the application 250 knows that a first wireless communication channel 261 (for example, UWB ranging session) for positioning the portable electronic device 200, established between the portable electronic device 200 and the first external electronic device (for example, anchors 202) is in the active state through the state switching notification 350, the service module 240 may let the application 250 know the active state of the first wireless communication channel 261 (for example, by not calling onSessionStatusChanged() API) and switch the state of the first wireless communication channel 261 to the idle state on behalf of the application 250. Further, the service module 240 may transmit a positioning request message including parameters or information related to the first wireless communication channel to the second external electronic device through a second wireless communication channel (for example, BLE session) 262 established between the portable electronic device 200 and the second external electronic device (for example, the wireless communication device 201). The parameters may include, for example, network address information (for example, media access control (MAC) address) of the first external electronic device, a session identifier (ID), a period of data communication for positioning (hereinafter, referred to as positioning communication), a scheme of positioning communication (for example, uplink TDoA or downlink TDoA), or geographical location information of the first external electronic device (for example, in the case of downlink TDoA). In response to reception of the positioning request message, the second external electronic device may establish a third wireless communication channel 263 (for example, UWB ranging session) with the first external electronic device on the basis of the received parameter and perform positioning communication for measuring the location of the portable electronic device 200 through the third wireless communication channel 263. As used herein, when an element is described as happening "in response to" an event, this may mean directly in response to the event, indirectly in response to the event (for example in response to another event caused by the event), or otherwise based on the event, for example based on detecting or recognizing the event, or based on an occurrence of the event at some previous point in time. When a predetermined second event is generated, the service module 240 may switch the state of the first wireless communication channel 261 from the idle state to the active state. Further, the service module 240 may transmit a message making a request for stopping (or requesting termination of) positioning communication for measuring the location of the portable electronic device 200 to the second external electronic device. In response to the message making the request for stopping positioning, the second external electronic device may stop data communication through the third wireless communication channel 263.

The first event causing the portable electronic device 200 to have a handover of the positioning communication to the second external electronic device may include an event (for example, an event of "phone in car") indicating that the portable electronic device 200 is located within the vehicle 203 as the user 204 gets in the vehicle 203 while holding the portable electronic device 200, an event indicating that the portable electronic device 200 approaches a predetermined distance from the vehicle 203, or an event representing a changing trend indicating that the distance between the portable electronic device 200 and the vehicle 203 is becoming shorter.

The second event causing the second external electronic device to stop positioning communication and the portable electronic device 200 to resume the positioning communication may include an event (for example, an event of 'phone outside car') indicating that the portable electronic device 200 is located outside the vehicle 203 as the user 204 leaves the vehicle 203 while holding the portable electronic device 200, an event indicating that the portable electronic device 200 becomes far from the vehicle 203 by a predetermined distance or longer, or an event representing a changing trend indicating that the distance between the portable electronic device 200 and the vehicle 203 is becoming longer.

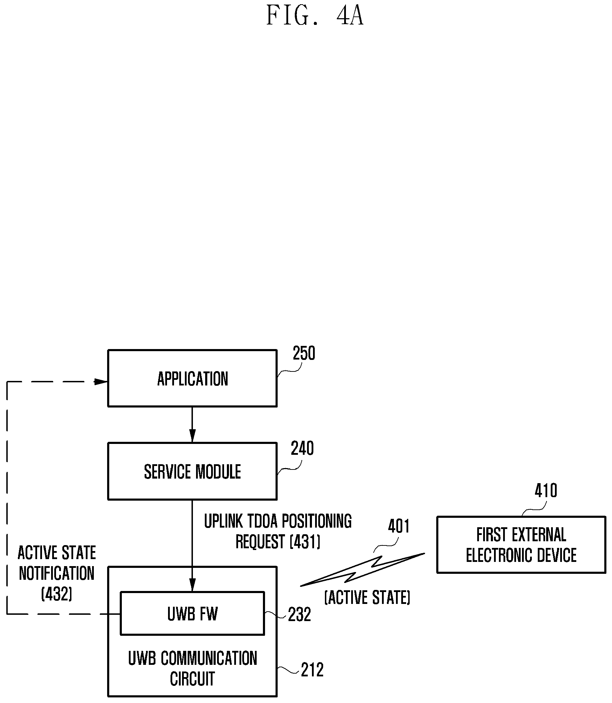

Referring to FIG. 4A, the application 250 may transmit a message 431 making a request for performing positioning communication in the uplink TDoA scheme to the UWB FW 232 through the service module 240. In response to the request for positioning in the uplink TDoA scheme, the UWB FW 232 may configure the state of a first wireless communication channel 401 (for example, the first wireless communication channel 261 of FIG. 2) as the active state and transmit a message 432 indicating that the state of the first wireless communication channel 401 is configured as the active state to the application 250. As the state of the first wireless communication channel 401 is configured as the active state, the UWB communication circuit 212 may transmit a UWB signal to a first external electronic device 410 (for example, the anchors 202 of FIG. 2) through the first wireless communication channel 401.

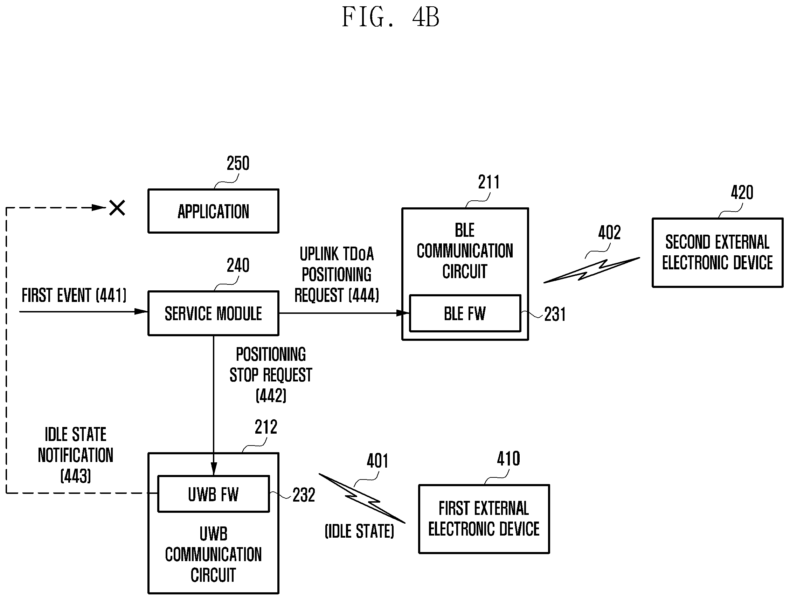

Referring to FIG. 4B, when the first event 441 is generated, the service module 240 may transmit a positioning stop request message 442 to the UWB FW 232. In response to the positioning stop request, the UWB FW 232 may configure the state of the first wireless communication channel 401 as the idle state. As the state of the first wireless communication channel 401 switches to the idle state, the UWB FW 232 may stop transmitting the UWB signal through the first wireless communication channel 401. The service module 240 may make a request for switching the state to the UWB FW 232, unknown to the application 250. In response to the request, the UWB FW 232 may cancel the transmission of the message 443 indicating switching to the idle state. In response to the generation of the first event 441, the service module 240 may make a request for transmitting a message 444 making a request for performing positioning communication in the uplink TDoA scheme to the second external electronic device 420 (for example, the wireless communication device 201 of FIG. 2) to the BLE FW 231. In response to the request, the BLE FW 231 may control the BLE communication circuit 211 to transmit the positioning request message 444 to the second external electronic device 420 through the second wireless communication channel 402.

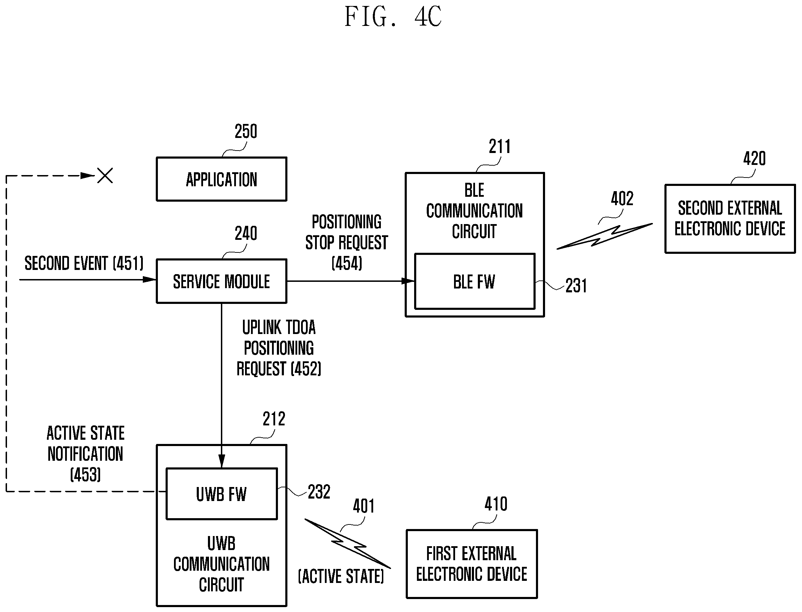

Referring to FIG. 4C, when the second event 451 is generated, the service module 240 may transmit a message 452 making a request for performing positioning communication in the uplink TDoA scheme to the UWB FW 232. In response to the positioning request, the UWB FW 232 may reconfigure the state of the first wireless communication channel 401 as the active state. As the state of the first wireless communication channel 401 is reconfigured as the active state, the UWB communication circuit 212 may resume the operation of transmitting the UWB signal of the uplink TDoA scheme to the first external electronic device 410 through the first wireless communication channel 401. The service module 240 may recognize the cancellation of transmission of the message 443 and accordingly cancel transmission of the message 453 indicating the reconfiguration as the active state. In response to the generation of the second event 451, the service module 240 may make a request for transmitting the positioning stop request message 454 to the second external electronic device 420 to the BLE FW 231. In response to the request, the BLE FW 231 may control the BLE communication circuit 211 to transmit the positioning stop request message 454 to the second external electronic device 420 through the second wireless communication channel 402.

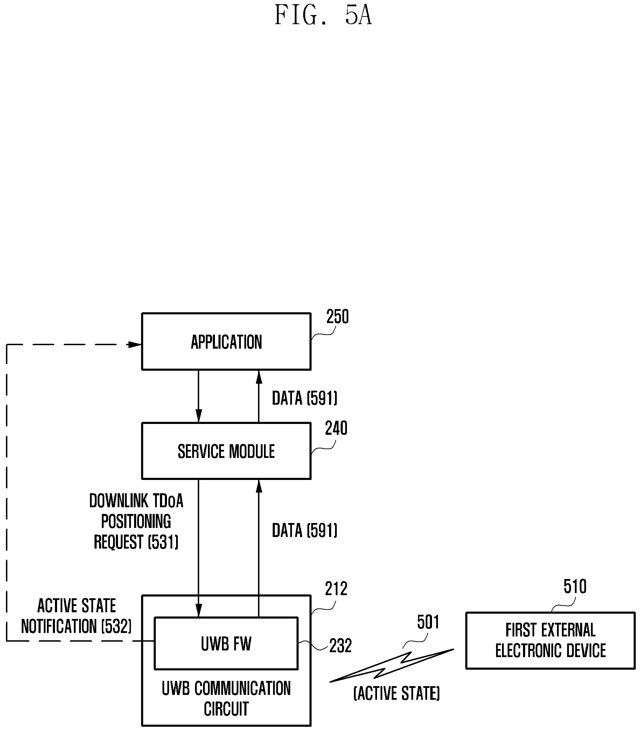

Referring to FIG. 5A, the application 250 may transmit a message 531 making a request for performing positioning communication in the downlink TDoA scheme to the UWB FW 232 through the service module 240 . In response to the request for positioning in the downlink TDoA scheme, the UWB FW 232 may configure the state of a first wireless communication channel 501 (for example, the first wireless communication channel 261 of FIG. 2) as the active state and transmit a message 532 indicating that the state of the first wireless communication channel 501 is configured as the active state to the application 250. As the state of the first wireless communication channel 501 is configured as the active state, the UWB communication circuit 212 may receive a UWB signal from the first external electronic device 510 (for example, the anchors 202 of FIG. 2) through the first wireless communication channel 401. The UWB FW 232 may generate data 591 (for example, a time stamp indicating a time point at which the UWB communication circuit 212 receives the UWB signal) used for measuring the location of the portable electronic device 200 by using the UWB signal received from the first external electronic device 510 and transmit the data to the application 250 through the service module 240.

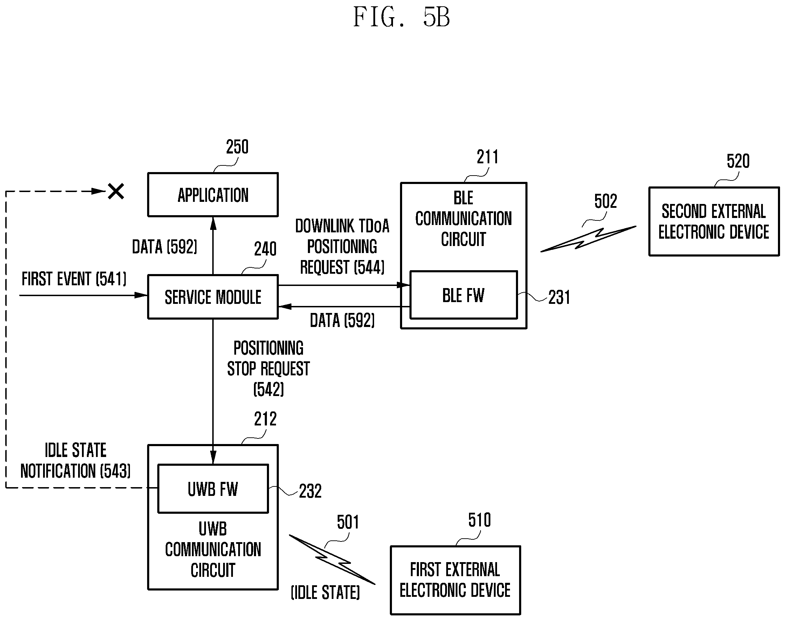

Referring to FIG. 5B, when the first event 541 is generated, the service module 240 may transmit a positioning stop request message 542 to the UWB FW 232. In response to the positioning stop request, the UWB FW 232 may configure the state of the first wireless communication channel 501 as the idle state. As the state of the first wireless communication channel 501 switches to the idle state, the UWB FW 232 may stop receiving the UWB signal through the first wireless communication channel 501. The service module 240 may make a request for switching the state to the UWB FW 232, unknown to the application 250. In response to the request, the UWB FW 232 may cancel the transmission of the message 543 indicating switching to the idle state. In response to the generation of the first event 541, the service module 240 may make a request for transmitting a message 544 making a request for performing positioning communication in the downlink TDoA scheme to the second external electronic device 520 (for example, the wireless communication device 201 of FIG. 2) to the BLE FW 231. In response to the request, the BLE FW 231 may control the BLE communication circuit 211 to transmit the positioning request message 544 to the second external electronic device 520 through the second wireless communication channel 502. The BLE FW 231 may receive data 592 used to measure the location of the portable electronic device 200 from the second external electronic device 520 through the BLE communication circuit 211 and transmit the data 592 to the application 250 through the service module 240.

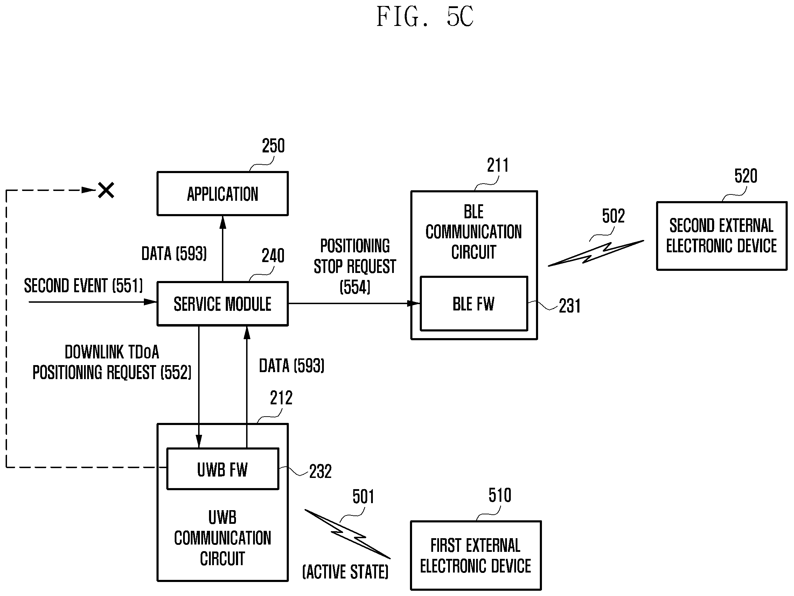

Referring to FIG. 5C, when the second event 551 is generated, the service module 240 may transmit a message 552 making a request for performing positioning communication in the downlink TDoA scheme to the UWB FW 232. In response to the positioning request, the UWB FW 232 may reconfigure the state of the first wireless communication channel 501 as the active state. As the state of the first wireless communication channel 501 is reconfigured as the active state, the UWB communication circuit 212 may resume the operation of receiving the UWB signal from the first external electronic device 510 through the first wireless communication channel 501. The service module 240 may recognize the cancellation of transmission of the message 543 and accordingly cancel transmission of the message 553 indicating the reconfiguration as the active state. In response to the generation of the second event 551, the service module 240 may make a request for transmitting the positioning stop request message 554 to the second external electronic device 520 to the BLE FW 231. In response to the request, the BLE FW 231 may control the BLE communication circuit 211 to transmit a positioning stop request message 554 to the second external electronic device 520 through the second wireless communication channel 502.

The BLE communication circuit 211 may establish a BLE communication channel (or a BLE session) corresponding to a frequency band predetermined to be used for BLE communication among bands to be used for wireless communication with an external electronic device (for example, the wireless communication device 201 installed in the vehicle 203 or the anchors 202). The BLE communication circuit 211 may perform BLE communication with the external electronic device through the BLE communication channel. In transmission, the BLE communication circuit 211 may convert a baseband signal generated by the processor 299 and received from the processor 299 into an RF signal in a BLE band and transmit the RF signal to the outside through the BLE antenna 221. In reception, the BLE communication circuit 211 may acquire an RF signal in a BLE band (for example, about 2.4 GHz) through the BLE antenna 221, convert the acquired RF signal into a signal in a baseband (for example, equal to or lower than several MHz), and transmit the baseband signal to the processor 299. According to an embodiment, the processor 299 may monitor whether the first event and the second event are generated while positioning communication is performed between the anchors 202 and the portable electronic device 200. For example, the processor 299 may recognize (or predict) that establishment of the BLE communication channel between the wireless communication device 201 and the portable electronic device 200 is the generation of the first event indicating that the portable electronic device 200 is located within the vehicle 203. According to the generation of the first event, the processor 299 may perform a handover to the wireless communication device 201 for positioning communication. The processor 299 may recognize (or predict) that deinitialization of the BLE communication channel is the generation of the second event indicating that the portable electronic device 200 leaves the vehicle 203. According to the generation of the second event, the processor 299 may end the handover and resume positioning communication.

The UWB communication circuit 212 may establish a UWB communication channel (or a UWB session) corresponding to a frequency band predetermined to be used for UWB communication (for example, about 3.1 to 10.6 GHz) among bands to be used for wireless communication with an external electronic device (for example, the wireless communication device 201 or the anchors 202). For example, the UWB communication circuit 212 may establish the UWB communication channel (in other words, the UWB session) and perform UWB communication through the established session. The UWB communication circuit 212 may perform UWB communication with the external electronic device through the UWB communication channel. In transmission, the UWB communication circuit 212 may convert a baseband signal generated by the processor 299 and received from the processor 299 into an RF signal in a UWB band and transmit the RF signal to the outside through the UWB antenna 222. In reception, the UWB communication circuit 212 may acquire an RF signal in a UWB band through the UWB antenna 222, convert the acquired RF signal into a baseband signal, and transmit the baseband signal to the processor 299. In embodiments, the wireless communication circuit 210 may further include a filter (for example, a UWB band pass filter) which filters the RF signal in the UWB band from the RF signal received from the UWB antenna 222 and transferring the RF signal to the UWB communication circuit 212. In embodiments, the UWB antenna 222 may include a plurality of antennas. For example, the UWB antenna 222 may include a first antenna for RF signaling transmission and reception and a second antenna for RF signal reception.

The WiFi communication circuit 213 may establish a WiFi communication channel (or a WiFi session) corresponding to a frequency band predetermined to be used for WiFi communication among bands to be used for wireless communication with an external electronic device (for example, the wireless communication device 201 or the anchors 202). The WiFi communication circuit 213 may perform WiFi communication with the external electronic device through the WiFi communication channel. In transmission, the WiFi communication circuit 213 may convert a baseband signal generated by the processor 299 and received from the processor 299 into an RF signal in a WiFi band and transmit the RF signal to the outside through the WiFi antenna 223. The WiFi communication circuit 213 may acquire the RF signal in the WiFi band through the WiFi antenna 223, convert the acquired RF signal into a baseband signal, and transmit the RF signal to the processor 299. According to an embodiment, the processor 299 may recognize that establishment of the WiFi communication channel between the wireless communication device 201 and the portable electronic device 200 is the generation of the first event indicating that the portable electronic device 200 is located within the vehicle 203 while the positioning communication is performed between the anchors 202 and the portable electronic device 200. According to the generation of the first event, the processor 299 may perform a handover to the wireless communication device 201 for positioning communication. The processor 299 may recognize (or predict) that deinitialization of the WiFi communication channel is the generation of the second event indicating that the portable electronic device 200 leaves the vehicle 203. According to the generation of the second event, the processor 299 may end the handover and resume positioning communication.

The processor 299 may receive the RF signal from the external electronic device (for example, the wireless communication device 201) through the wireless communication circuit 210 and calculate the distance between the external electronic device the portable electronic device 200 on the basis of a signal strength value (for example, a received signal strength indicator (RSSI)) acquired through measurement of the signal strength.

The processor 299 may recognize a changing trend of the distance. For example, the changing trend may include information indicating whether there will be a change in the distance and information indicating whether, if there is a distance change, the distance will become shorter or longer. Further, the changing trend may further include information indicating, when the distance becomes shorter or longer, a speed at which the distance is shorter and/or a change in speed per unit time (for example acceleration).

In an embodiment, the processor 120 may calculate the change in distance per unit time on the basis of a plurality of distance values acquired through periodic reception of the RF signal. The processor 299 may recognize the changing trend of the distance on the basis of the change. For example, when the change (for example, current distance value - previous distance value) is a negative value, the processor 299 may determine the trend indicating that the distance between the external electronic device and the portable electronic device 200 is becoming shorter. When the change is a positive value, the processor 299 may determine the trend indicating that the distance between the external electronic device and the portable electronic device 200 is becoming longer. In another example, the processor 299 may recognize speed and/or acceleration when the distance between the external electronic device and the portable electronic device 200 becomes shorter or longer on the basis of the calculated change.

In an embodiment, the processor 299 may recognize a movement state of the portable electronic device 200 on the basis of data received from a sensor (for example, the acceleration sensor of the sensor module 176). The processor 299 may recognize the changing trend on the basis of the change in distance and the movement state. For example, the processor 299 may calculate the speed or acceleration of the portable electronic device 200 on the basis of the data received from the sensor and determine that the portable electronic device 200 is moving on the basis of the calculated value. When the change in distance acquired from the periodically received RF signal is a negative value in the state in which the portable electronic device 200 is moving, the processor 299 may determine the trend indicating that the distance between the external electronic device and the portable electronic device 200 is becoming shorter. When the change in distance acquired from the periodically received RF signal is a positive value in the state in which the portable electronic device 200 is moving, the processor 299 may determine the trend indicating that the distance between the external electronic device and the portable electronic device 200 is becoming longer.

In an embodiment, the processor 299 may recognize the changing trend on the basis of a change in strength of the RF signal (for example, an RF signal having an advertising or broadcasting packet) received from the external electronic device (for example, the wireless communication device 201) through the wireless communication circuit 210 (for the BLE communication circuit 211) and the movement state of the portable electronic device 200. For example, when it is recognized that the portable electronic device 200 is moving and the strength of the RF signal becomes stronger, the processor 299 may determine the trend indicating that the distance between the external electronic device and the portable electronic device 200 is becoming shorter. When it is recognized that the portable electronic device 200 is moving and the strength of the RF signal becomes weaker, the processor 299 may determine the trend indicating that the distance between the external electronic device and the portable electronic device 200 is becoming longer.

According to an embodiment, when a signal strength value acquired through measurement of the signal strength is within a predetermined reference value while positioning communication is performed between the anchors 202 and the portable electronic device 200, the processor 299 may recognize that the first event is generated. According to the generation of the first event, the processor 299 may perform a handover to the wireless communication device 201 for positioning communication. When a signal strength value acquired through measurement of the signal strength is larger than the reference value while positioning communication is performed by the wireless communication device 201, the processor 299 may recognize that the second event is generated. According to the generation of the second event, the processor 299 may end the handover and resume positioning communication.

According to an embodiment, when a distance value acquired through calculation of the distance between the wireless communication device 201 and the portable electronic device 200 is within a predetermined reference value while positioning communication is performed between the anchors 202 and the portable electronic device 200, the processor 299 may recognize that the first event is generated. According to the generation of the first event, the processor 299 may perform a handover to the wireless communication device 201 for positioning communication. When the distance value acquired through calculation of the distance is larger than the reference value while positioning communication is performed by the wireless communication device 201, the processor 299 may recognize that the second event is generated. According to the generation of the second event, the processor 299 may end the handover and resume positioning communication.

In an embodiment, when the changing trend indicates that the distance between the wireless communication device 201 and the portable electronic device 200 is becoming shorter while positioning communication is performed between the anchors 202 and the portable electronic device 200, the processor 299 may recognize that the first event is generated. According to the generation of the first event, the processor 299 may perform a handover to the wireless communication device 201 for positioning communication. When the changing trend is changed such that the distance between the two sides is becoming longer, the processor 299 may recognize that the second event is generated. According to the generation of the second event, the processor 299 may end the handover and resume positioning communication.

According to an embodiment, when a predetermined third event is generated while the application 250 knows that the first wireless communication channel (for example, UWB ranging session) 261 for positioning the portable electronic device 200, established between the portable electronic device 200 and the first external electronic device (for example, anchors 202) is in the active state through the state switching notification 260, the service module 240 may maintain the active state of the first wireless communication channel 261 and transmit a positioning request message including parameters (or information) related to the first wireless communication channel to the second external electronic device through the second wireless communication channel 262 (for example, the BLE session) established between the portable electronic device 200 and the second external electronic device (for example, the wireless communication device 201). The parameters may include, for example, network address information (for example, MAC address) of the first external electronic device, a session ID, a period of positioning communication, a scheme of positioning communication (for example, uplink TDoA or downlink TDoA), or location information of the first external electronic device. In response to reception of the positioning request message, the second external electronic device may establish the third wireless communication channel 263 for connecting the first external electronic device with the portable electronic device 200 on the basis of the received parameter and perform positioning communication for measuring the location of the portable electronic device 200 through the third wireless communication channel 263. When a predetermined fourth event is generated, the service module 240 may transmit a message making a request for stopping positioning communication to the second external electronic device. In response to the message making the request for stopping positioning, the second external electronic device may stop data communication through the third wireless communication channel 263.

When the vehicle 203 is an autonomous car capable of remotely starting, the third event causing the second external electronic device to start the positioning communication may include an event (for example, an event of 'phone recall car') calling the vehicle 203 by the portable electronic device 200. For example, the user 204 may call the vehicle 203 through the portable electronic device 200 such that the vehicle 203 parked in a parking lot of a grocery store automatically drives to the entrance of the store. The processor 299 may be configured to provide a user interface (UI) screen for calling the vehicle 203 to the user 204 through a display (for example, the display module 160 of FIG. 1). The processor 299 may generate a call signal in response to a user input (for example, a touch input) received through the UI screen. The processor 299 may transmit the call signal to the wireless communication device 201 through a short-range wireless communication module (for example, the WiFi communication circuit 213) or a cellular communication module. The processor 299 may recognize the call signal as the third event.

The fourth event causing the second external electronic device to stop the positioning communication may include an event (for example, an event of 'recall car done') indicating that the vehicle 203 approaches the portable electronic device 200 by a predetermined distance in response to the vehicle call. For example, when the wireless communication channel (for example, the BLE communication channel, the WiFi communication channel, or the UWB communication channel) for connecting the wireless communication device 201 with the portable electronic device 200 is established and the distance between the two sides becomes shorter than a predetermined reference value, the processor 299 may recognize that the fourth event is generated. In another example, the processor 299 may receive a signal indicating that the vehicle 203 reaches the location of the user 204 from the wireless communication device 201 and recognize reception of the signal as the generation of the fourth event.

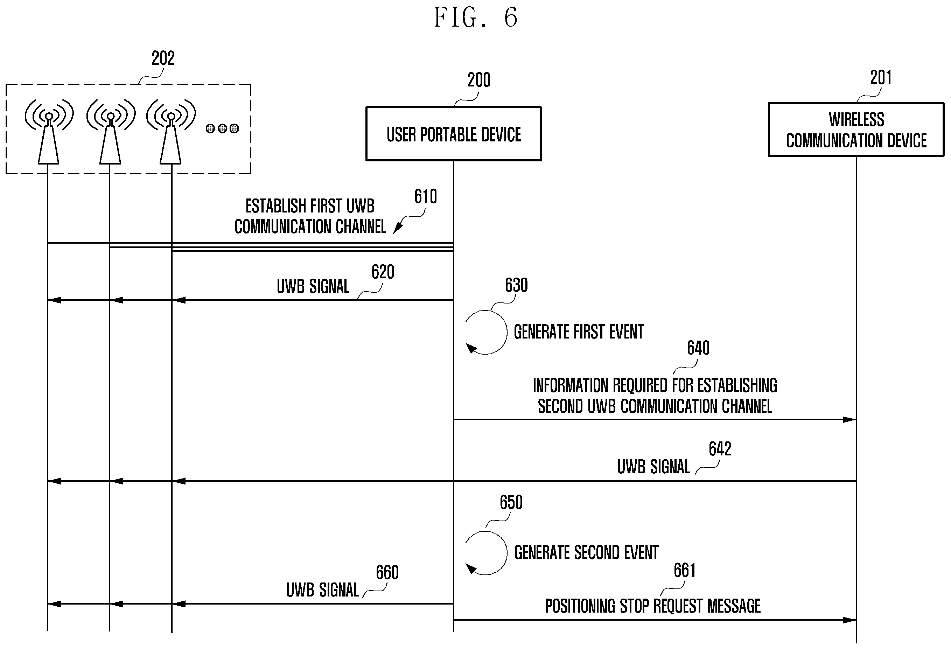

FIG. 6 is a flowchart illustrating a positioning communication method of the uplink TDoA scheme in the positioning information according to an embodiment.

Referring to FIG. 6, in operation 610, the processor 299 of the portable electronic device 200 may establish a first UWB communication channel (for example, the first wireless communication channel 261 of FIG. 2 or the first wireless communication channel 401 of FIG. 4A) with the anchors 201 through the wireless communication circuit 210.

According to an embodiment of operation 610, the BLE may have low power consumption and a relatively longer recognition distance (for example, a distance in which the existence of the anchors 202 around the portable electronic device 200 can be recognized) than the UWB. The UWB may have relatively high positioning accuracy. Accordingly, the BLE may be used as a trigger for activating positioning communication. The processor 299 may establish the BLE communication channel for connecting the portable electronic device 200 with the anchors 202 through the BLE communication circuit 211. The processor 299 may exchange information (which may be referred to as session information) which may be used to establish the first UWB communication channel with the anchors 202 through the established BLE communication channel. For example, the processor 299 may receive the session information from the anchors 202 through the BLE communication circuit 211. The received session information may include network address information of each of the anchors 202 (for example, MAC address), a session ID, a period of positioning communication (for example, a period of transmission of a UWB signal), a value indicating whether a scheme of positioning communication is an uplink TDoA scheme or a downlink TDoA scheme, or content about a frame structure of a UWB signal (for example, a frame configuration, a preamble index (Idx), or a short training symbol (Idx)). In the operation of establishing the first UWB communication channel, the processor 299 may receive additional information (for example, geographical location information (for example, coordinates) of each of the anchors 202 ) from the anchors 202 through the BLE communication channel. The processor 299 may establish the UWB communication channel with the anchors 202 through the UWB communication circuit 212 on the basis of the information received from the anchors 202 .

According to another embodiment, the processor 299 may establish the WiFi communication channel for connecting the anchors 202 with the portable electronic device 200 through the WiFi communication circuit 213 and exchange session information which may be used to establish the UWB communication channel with the anchors 202 through the WiFi communication channel. The processor 299 may establish the UWB communication channel for connecting the anchors 202 with the portable electronic device 200 through the UWB communication circuit 212 on the basis of the information received from the anchors 202.

In operation 620, the processor 299 may control the UWB communication circuit 212 to periodically transmit a UWB signal for positioning the portable electronic device 200 to the anchors 202 through the first UWB communication channel. The anchors 202 may transmit time information (for example, a timestamp) of the UWB signal received from the portable electronic device 200 to a positioning server. The positioning server may measure the location of the portable electronic device 200 on the basis of time information received from the anchors 202 and location information of the known anchors and provide the location information to the portable electronic device 200.

In operation 630, the processor 299 may recognize the generation of a first event causing the portable electronic device 200 to perform a handover of positioning communication to the wireless communication device 201 while the UWB signal is periodically transmitted to the anchors 202.

In operation 640, the processor 299 may transmit information which may be used to establish a second UWB communication channel (for example, the third wireless communication channel 263 of FIG. 2) between the anchors 202 and the wireless communication device 201 to the wireless communication device 201 through the wireless communication circuit 210 in response to the generation of the first event. For example, the processor 299 may transmit information to the wireless communication device 201 through a BLE communication channel (for example, the second wireless communication channel 262 of FIG. 2 or the second wireless communication channel 402 of FIG. 4B) established between the portable electronic device 200 and the wireless communication device 201. The information transmitted to the wireless communication device 201 may include session information received from the anchors 202 in the operation of establishing the first UWB communication channel. The processor 299 may stop transmitting the UWB signal by switching the first UWB communication channel to the idle state in response to the generation of the first event. In some embodiments, the processor 299 may continue to transmit the UWB signal without stopping, even though the first event is generated.

In operation 642, the wireless communication device 201 may periodically transmit the UWB signal to the anchors 202 through the second UWB communication channel. The anchors 202 may transmit time information (for example, timestamp) of the UWB signal received from the wireless communication device 201 to the positioning server. The positioning server may measure the location of the wireless communication device 201 on the basis of time information received from the anchors 202 and location information of the known anchors and provide the location information to the portable electronic device 200 and/or the wireless communication device 201.

In operation 650, the processor 299 may stop positioning communication in the wireless communication device 201 while the positioning communication is performed by the wireless communication device 201 instead of the portable electronic device 200, and may recognize the generation of a second event causing the portable electronic device 200 to resume the positioning communication.

In operation 660, the processor 299 may resume transmission of the UWB signal by switching the first UWB communication channel to the active state in response to the generation of the second event. In operation 661, the processor 299 may transmit a message making a request for stopping positioning communication to the wireless communication device 201 in response to the generation of the second event. In response to the stop request, the wireless communication device 201 may switch the state of the second UWB communication to the idle state (or release establishment of the second UWB communication channel), so as to stop transmitting UWB signal.

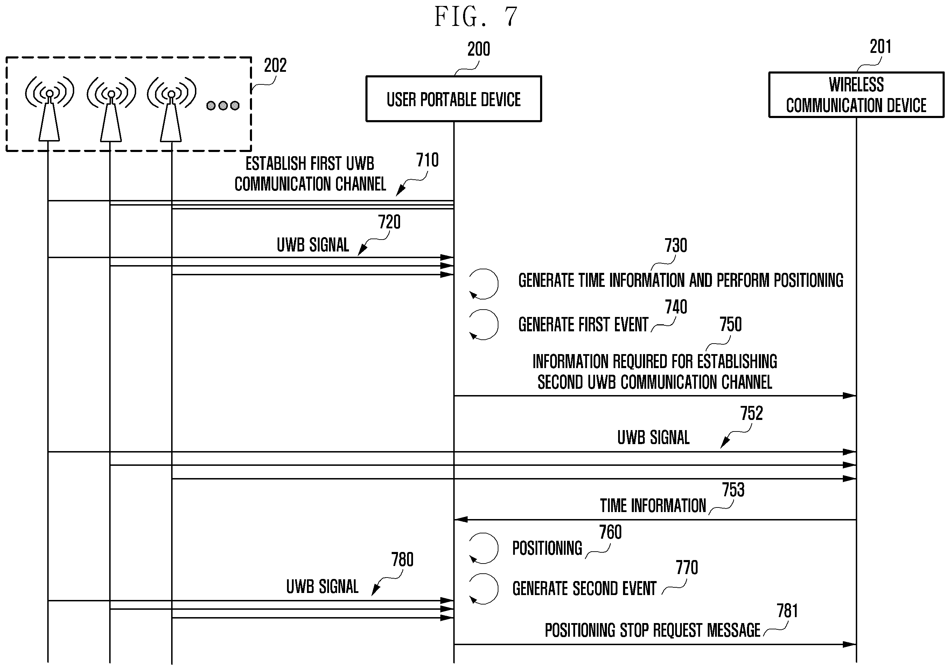

FIG. 7 is a flowchart illustrating a positioning communication method of the downlink TDoA scheme in the positioning system according to an embodiment. In a description of FIG. 7, overlapping or redundant description from the description of FIG. 6 is omitted or is briefly described.

Referring to FIG. 7, in operation 710, the processor 299 of the portable electronic device 200 may establish a first UWB communication channel (for example, the first wireless communication channel 261 of FIG. 2 or the first wireless communication channel 501 of FIG. 5A) for connecting the anchors 202 with the portable electronic device 200 through the wireless communication circuit 210. For example, the processor 299 may establish a wireless communication channel (for example, the BLE communication channel or the WiFi communication channel) for connecting the portable electronic device 200 with the anchors 202 through the BLE communication circuit 211. The processor 299 may exchange information which may be used to establish the first UWB communication channel with the anchors 202 through the established wireless communication channel. The processor 299 may establish the UWB communication channel for connecting the anchors 202 with the portable electronic device 200 through the UWB communication circuit 212 on the basis of the information received from the anchors 202.

In operation 720, the processor 299 may periodically receive a UWB signal from the anchors 202 through the first UWB communication channel using the UWB communication circuit 212. For example, a period on which the UWB communication circuit 212 receives the UWB signal may be synchronized with a period on which the anchors 202 generate a clock signal.

In operation 730, the processor 299 may generate information (for example, timestamps) indicating a time point at which the UWB signal is received from the anchors 202 through the first UWB communication channel and measure the location of the portable electronic device 200 on the basis of the generated time information and location information of the anchors 202.

In operation 740, the processor 299 may recognize the generation of the first event causing the portable electronic device 200 to perform a handover of positioning communication to the wireless communication device 201 while the UWB signal is periodically received from the anchors 202.

In operation 750, the processor 299 may transmit session information which may be used to establish a second UWB communication channel (for example, the third wireless communication channel 263 of FIG. 2) for connecting the anchors 202 with the wireless communication device 201 to the wireless communication device 201 through the wireless communication circuit 210 in response to the generation of the first event. For example, the processor 299 may transmit information to the wireless communication device 201 through a BLE communication channel (for example, the second wireless communication channel 262 of FIG. 2 or the second wireless communication channel 502 of FIG. 5B) established between the portable electronic device 200 and the wireless communication device 201. The information transmitted to the wireless communication device 201 may include information received from the anchors 202 in the operation of establishing the first UWB communication channel. The processor 299 may stop receiving the UWB signal by switching the first UWB communication channel to the idle state in response to the generation of the first event.

In operation 752, the wireless communication device 201 may periodically receive the UWB signal from the anchors 202 through the second UWB communication channel. In operation 753, the wireless communication device 201 may generate information (for example, timestamps) indicating a time point at which the UWB signal is received from the anchors 202 through the second UWB communication channel and provide the generated time information to the portable electronic device 200 through the wireless communication channel (for example, the BLE communication channel).

In operation 760, the processor 299 may receive time information from the wireless communication device 201 through the wireless communication channel and measure the location of the wireless communication device 201 on the basis of the received time information and location information of the anchors 202. According to some embodiments, the wireless communication device 201 may receive the location information of the anchors 202 from the portable electronic device 200 through the wireless communication channel (for example, the BLE communication channel). When the wireless communication device 201 is aware of the location information of the anchors 202, the wireless communication device 201 may measure the location of the wireless communication device 201 on the basis of the time information on behalf of the portable electronic device 200 and transmit information indicating the measurement result to the portable electronic device 200.

In operation 770, the processor 299 may stop positioning communication in the wireless communication device 201 while the positioning communication is performed by the wireless communication device 201 instead of the portable electronic device 200, and may recognize the generation of a second event causing the portable electronic device 200 to resume the positioning communication. In some embodiments, the processor 299 may receive a third event indicating the end of the positioning communication in the wireless communication device 201 from the wireless communication device 201. A navigation system installed in the vehicle may transmit information indicating that the vehicle arrives at the destination to the wireless communication device 201, and the wireless communication device 201 may generate the third event as the corresponding information and transmit the third event to the processor 299 of the portable electronic device 200.

In operation 780, the processor 299 may resume reception of the UWB signal by switching the first UWB communication channel to the active state in response to the generation of the second event (or reception of the third event). In operation 781, the processor 299 may transmit a message making a request for stopping positioning communication to the wireless communication device 201 in response to the generation of the second event. In response to the stop request, the wireless communication device 201 may switch the state of the second UWB communication channel to the idle state (or release the establishment of the second UWB communication channel), in order to stop receiving the UWB signal. In response to the stop request, the wireless communication device 201 may transmit additional information (for example, a signal strength value) related to the anchors 202 to the portable electronic device 200 through the BLE communication channel. The portable electronic device 200 may use the additional information received from the wireless communication device 201 to calculate a time point at which the UWB signal is received from the anchors 202 through the first UWB communication channel.

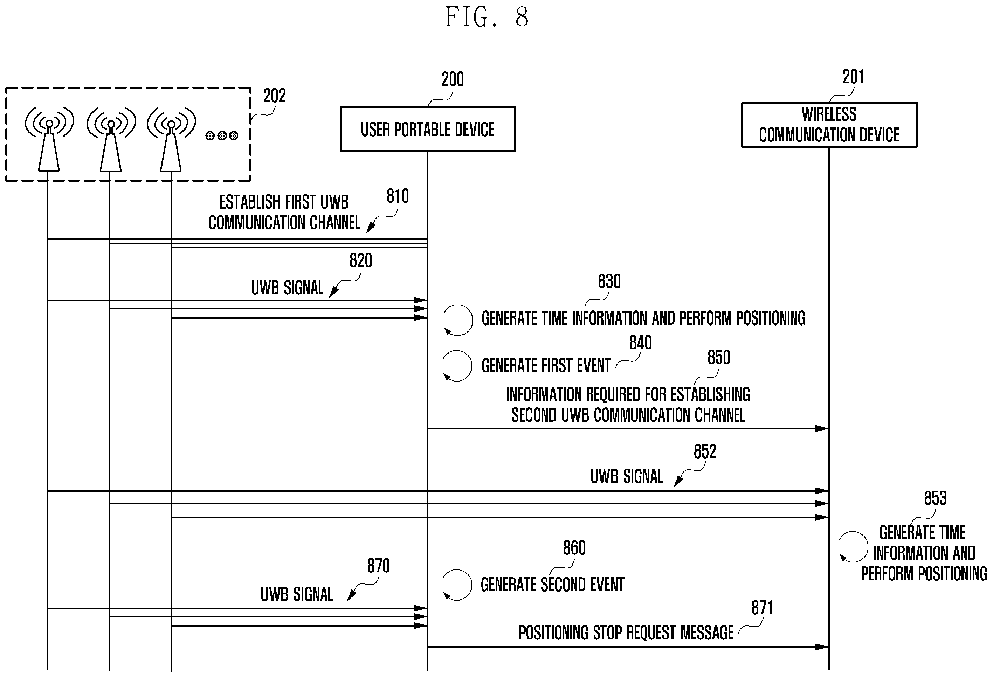

FIG. 8 is a flowchart illustrating a positioning communication method of the downlink TDoA scheme in the positioning system according to an embodiment. In a description of Fig. 8, the overlapping or redundant description from the description of FIGs. 6 and 7 is omitted or is briefly described.

Referring to FIG. 8, in operation 810, the processor 299 of the portable electronic device 200 may establish a first UWB communication channel (for example, the first wireless communication channel 261 of FIG. 2 or the first wireless communication channel 501 of FIG. 5A) with the anchors 202 through the wireless communication circuit 210.

In operation 820, the processor 299 may periodically receive a UWB signal from the anchors 202 through the first UWB communication channel using the UWB communication circuit 212.

In operation 830, the processor 299 may generate information (for example, timestamps) indicating a time point at which the UWB signal is received from the anchors 202 through the first UWB communication channel and measure the location of the portable electronic device 200 on the basis of the generated time information and location information of the anchors 202.

In operation 840, the processor 299 may recognize the generation of a first event while the UWB signal is periodically received from the anchors 202.

In operation 850, the processor 299 may transmit information which may be used to establish a second UWB communication channel (for example, the third wireless communication channel 263 of FIG. 2) for connecting the anchors 202 with the wireless communication device 201 to the wireless communication device 201 through the wireless communication circuit 210 in response to the generation of the first event. For example, the processor 299 may transmit information to the wireless communication device 201 through a BLE communication channel (for example, the second wireless communication channel 262 of FIG. 2 or the second wireless communication channel 502 of FIG. 5B) established between the portable electronic device 200 and the wireless communication device 201. The information transmitted to the wireless communication device 201 may include information received from the anchors 202 in the operation of establishing the first UWB communication channel. The processor 299 may stop receiving the UWB signal by switching the first UWB communication channel to the idle state in response to the generation of the first event. In operation 850, the processor 299 may provide additional information related to the anchors 202 to the wireless communication device 201 through the BLE communication channel. For example, through the BLE communication channel, the processor 299 may provide the wireless communication device 201 with information on the strength of the UWB signal (for example, an RSSI) received from each of the anchors 202 as data used for acquiring the time point at which the UWB signal is received.

In operation 852, the wireless communication device 201 may periodically receive the UWB signal from the anchors 202 through the second UWB communication channel. In operation 853, the wireless communication device 201 may generate information (for example, timestamps) indicating the time point at which the UWB signal is received from the anchors 202 through the second UWB communication channel and measure the location of the wireless communication device 201 on the basis of the generated time information and location information of the anchors 202. The wireless communication device 201 may provide information related to the measured location to the portable electronic device 200 through the wireless communication channel (for example, the BLE communication channel).

In operation 860, the processor 299 may stop positioning communication in the wireless communication device 201 while the positioning communication is performed by the wireless communication device 201 instead of the portable electronic device 200, and may recognize the generation of a second event causing the portable electronic device 200 to resume the positioning communication.

In operation 870, the processor 299 may resume reception of the UWB signal by switching the first UWB communication channel to the active state in response to the generation of the second event. In operation 871, the processor 299 may transmit a message making a request for stopping positioning communication to the wireless communication device 201 in response to the generation of the second event. In response to the stop request, the wireless communication device 201 may switch the state of the second UWB communication channel to the idle state (or release the establishment of the second UWB communication channel), in order to stop receiving the UWB signal. In response to the stop request, the wireless communication device 201 may transmit additional information (for example, a signal strength value) related to the anchors 202 to the portable electronic device 200 through the BLE communication channel. The portable electronic device 200 may use the additional information received from the wireless communication device 201 to calculate a time point at which the UWB signal is received from the anchors 202 through the first UWB communication channel.

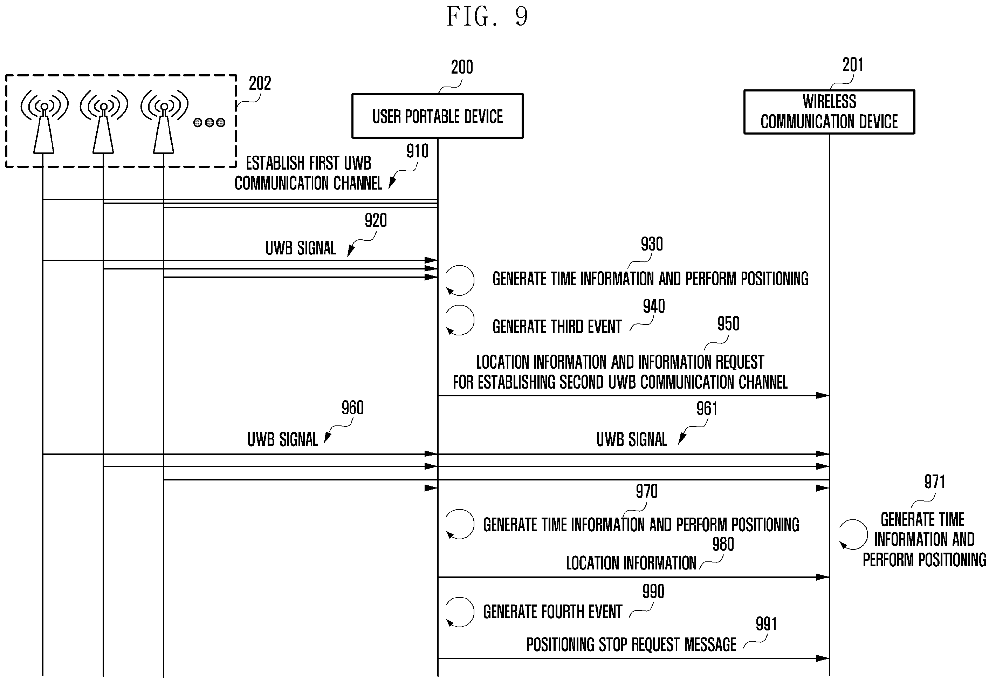

FIG. 9 is a flowchart illustrating a positioning communication method of the downlink TDoA scheme in the positioning system according to an embodiment. In a description of FIG. 9, overlapping or redundant description from FIGs. 6, 7, and 8 is omitted or is briefly described.

Referring to FIG. 9, in operation 910, the processor 299 of the portable electronic device 200 may establish a first UWB communication channel (for example, the first wireless communication channel 261 of FIG. 2 or the first wireless communication channel 501 of FIG. 5A) for connecting the anchors 202 with the portable electronic device 200 through the wireless communication circuit 210.

In operation 920, the processor 299 may periodically receive a UWB signal from the anchors 202 through the first UWB communication channel using the UWB communication circuit 212. For example, a period on which the UWB communication circuit 212 receives the UWB signal may be synchronized with a period on which the anchors 202 generate a clock signal.

In operation 930, the processor 299 may generate information (for example, timestamps) indicating a time point at which the UWB signal is received from the anchors 202 through the first UWB communication channel and measure the location of the portable electronic device 200 on the basis of the generated time information and location information of the anchors 202.

In operation 940, the processor 299 may recognize the generation of a third event causing the wireless communication device 201 to start positioning communication while the UWB signal is periodically received from the anchors 202.

In operation 950, the processor 299 may transmit session information which may be used to establish a second UWB communication channel (for example, the third wireless communication channel 263 of FIG. 2) for connecting the anchors 202 with the wireless communication device 201 and location information indicating the location of the portable electronic device 200 acquired through positioning communication with the anchors 202 to the wireless communication device 201 through the wireless communication circuit 210. For example, the processor 299 may transmit the session information and the location information to the wireless communication device 201 through the BLE communication channel (for example, the second wireless communication channel 262 of FIG. 2 or the second wireless communication channel 502 of FIG. 5B) established between the portable electronic device 200 and the wireless communication device 201. The information transmitted to the wireless communication device 201 may include information received from the anchors 202 in the operation of establishing the first UWB communication channel. In operation 950, the processor 299 may provide additional information related to the anchors 202 to the wireless communication device 201 through the BLE communication channel. For example, through the BLE communication channel, the processor 299 may provide the wireless communication device 201 with information on the strength of the UWB signal (for example, an RSSI) received from each of the anchors 202 as data used for acquiring the time point at which the UWB signal is received. Through the BLE communication channel, the processor 299 may provide the wireless communication device 201 with information indicating the geographical information of the anchors 202 as data used for measuring the location of the wireless communication device 201.

In operation 960, the processor 299 may periodically receive the UWB signal from the anchors 202 through the first UWB communication channel. In operation 961, the wireless communication device 201 may periodically receive the UWB signal from the anchors 202 through the second UWB communication channel.

In operation 970, the processor 299 may generate information (for example, timestamps) indicating the time point at which the UWB signal is received from the anchors 202 through the first UWB communication channel and measure the location of the portable electronic device 200 on the basis of the generated time information and location information of the anchors 202. In operation 971, the wireless communication device 201 may generate information (for example, timestamps) indicating the time point at which the UWB signal is received from the anchors 202 through the second UWB communication channel and measure the location of the wireless communication device 201 on the basis of the generated time information and location information of the anchors 202.

In operation 980, the processor 299 may share the location information of the portable electronic device 200 with the wireless communication device 201 through the BLE communication channel. The vehicle 203 may automatically drive to the location of the user 204 on the basis of the location information of the portable electronic device 200 and the location information of the wireless communication device 201. In some embodiments, the wireless communication device 201 may perform UWB communication separately from the portable electronic device 200 and accordingly may know the location information of the portable electronic device 200. Therefore, in embodiments the operations 960, 970, and 980 may be omitted in the flowchart of FIG. 9.

In operation 990, the processor 299 may recognize the generation of a fourth event causing the wireless communication device 201 to stop positioning communication. For example, the processor 299 may receive a signal indicating that the vehicle 203 arrives at the location of the user 204 from the wireless communication device 201 through the BLE communication channel and recognize the reception of the signal as the generation of the fourth event. In operation 991, the processor 299 may transmit a message making a request for stopping positioning communication to the wireless communication device 201 in response to the generation of the fourth event. In response to the stop request, the wireless communication device 201 may switch the state of the second UWB communication channel to the idle state (or release the establishment of the second UWB communication channel), in order to stop receiving the UWB signal.

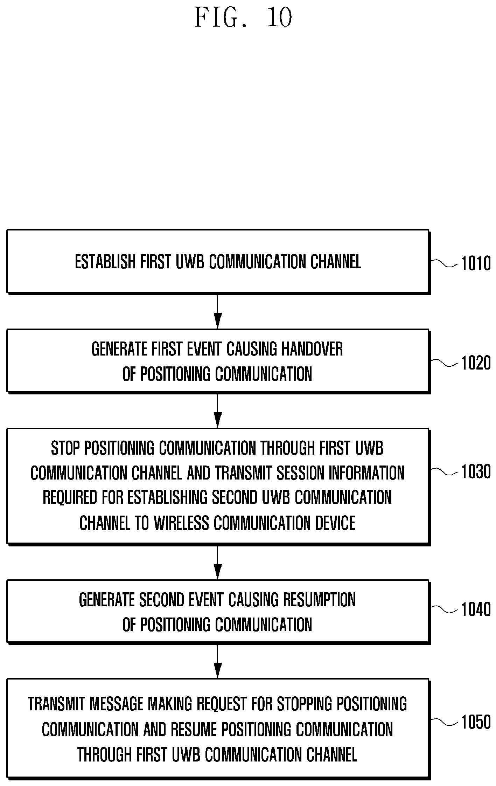

FIG. 10 is a flowchart illustrating operations of the processor 299 in the portable electronic device 200 according to an embodiment.

Referring to FIG. 10, in operation 1010, the processor 299 may establish a first UWB communication channel (for example, the first wireless communication channel 261 of FIG. 2) for connecting the anchors 202 with the portable electronic device 200 through the UWB communication circuit 212.

In operation 1020, the processor 299 may recognize or detect the first event causing the portable electronic device 200 to perform a handover of positioning communication to the wireless communication device 201 while the positioning communication through the first UWB communication channel is performed. As illustrated in FIG. 2, the wireless communication device 201 is installed in the vehicle 203, but embodiments are not limited thereto. For example, the wireless communication device 201 may be another portable device (for example, a notebook personal computer) of the user 204.

In operation 1030, the processor 299 may stop positioning communication through the first UWB communication channel and transmit session information used for establishing a second UWB communication channel (for example, the third wireless communication channel 263 of FIG. 2) for connecting the anchors 202 with the wireless communication device 201 to the wireless communication device 201 through the BLE communication circuit 211 in response to the generation of the first event. The WiFi communication circuit 213 may be used to transmit the session information.

In operation 1040, the processor 299 may recognize the generation of a second event causing resumption of the positioning communication through the first UWB communication channel while the positioning communication through the second UWB communication channel is performed.

In operation 1050, the processor 299 may transmit a message making a request for stopping positioning communication through the second UWB communication channel to the wireless communication device 201 through the BLE communication circuit 211 and resume the positioning communication through the first UWB communication channel in response to the generation of the second event. The WiFi communication circuit 213 may be used to transmit the message.

In various embodiments, an electronic device (for example, the portable electronic device 200 of FIG. 2) may include: a first short-range wireless communication circuit configured to be used for UWB communication; a second short-range wireless communication circuit configured to be used for short-range wireless communication different from the UWB communication; a processor (for example, the processor 299 of FIG. 2) operatively connected to the first short-range wireless communication circuit and the second short-range wireless communication circuit; and a memory (for example, the memory 288 of FIG. 2) operatively connected to the processor. The memory may store instructions which, when executed by the processor tocause the processor to recognize that a first event causing the electronic device to perform a handover of positioning communication to a second external electronic device is generated while the electronic device performs first UWB communication for positioning with a plurality of first external electronic devices through the first short-range wireless communication circuit, and stop positioning communication through a first UWB communication channel and transmit information used by the second external electronic device for second UWB communication with the first external electronic devices to the second external electronic device through the second short-range wireless communication circuit in response to the generation of the first event.

The instructions may cause the processor to recognize that a second event causing resumption of the first UWB communication is generated while the second UWB communication is performed in the second external electronic device, and transmit a message making a request for stopping the second UWB communication to the second external electronic device through the second short-range wireless communication circuit and resume the first UWB communication in response to the generation of the second event.

The second short-range wireless communication circuit may be a BLE communication circuit, and the instructions may cause the processor to connect the electronic device with the second external electronic device through the BLE communication circuit, recognize the connection through the BLE communication circuit as the generation of the first event, and recognize release of the connection through the BLE communication circuit as the generation of the second event.

The instructions may cause the processor to measure a strength of an RF signal received from the second external electronic device through the second short-range wireless communication circuit, recognize that the first event is generated when a signal strength value acquired through the measurement is smaller than a predetermined reference value, and recognize that the second event is generated when the signal strength value acquired through the measurement is larger than the reference value while the second UWB communication is performed.

The instructions may cause the processor to measure a strength of an RF signal received from the second short-range wireless communication circuit, recognize a changing trend of a distance between the second external electronic device and the electronic device, based on a change in a signal strength value acquired through measurement, recognize that the first event is generated when the recognized changing trend is a decreasing trend, and recognize that the second event is generated when the recognized changing trend is an increasing trend.

The instructions may cause the processor to receive UWB signals from the first external electronic devices through the first UWB communication, and determine a location of the electronic device, based on a time point at which the UWB signals are received and geographical location information of the first external electronic devices.

The instructions may cause the processor to receive time point information indicating a time point at which the second external electronic device receives UWB signals from the second external electronic device through the second short-range wireless communication circuit while the second UWB communication is performed, and determine a location of the second external electronic device, based on the time point information and geographical location information of the first external electronic devices.

The instructions may cause the processor to receive location information of the second external electronic device from the second external electronic device through the second short-range wireless communication circuit while the second UWB communication is performed.

The electronic device may further include an application, a service module, and UWB firmware stored in the memory and executed by the processor. The application may make a request for positioning communication to the UWB firmware through the service module. The UWB firmware may configure a state of a channel for the first UWB communication as an active state to perform the first UWB communication in the first short-range wireless communication circuit and transmit a message indicating that the state of the channel is configured as the active state to the application in response to the request. The service module may allow the UWB firmware to switch the state of the channel to an idle state by transmitting a message making a request for stopping the first UWB communication to the UWB firmware, instruct the UWB firmware to not inform the application of the switching to idle state, and transmit a message making requesting initiation of the second UWB communication to the second external electronic device through the second short-range wireless communication circuit in response to the generation of the first event, and may allow the UWB firmware to switch the state of the channel to the active state by transmitting a message requesting resumption of the first UWB communication to the UWB firmware and transmit a message requesting termination of the second UWB communication to the second external electronic device through the second short-range wireless communication circuit in response to the generation of the second event.

When the channel for the first UWB communication is established, the instructions may cause the processor to insert information received from the first external electronic devices into the information and transmit the information to the second external electronic device.

In various embodiments, an electronic device (for example, the portable electronic device 200 of FIG. 2) may include: a first short-range wireless communication circuit configured to be used for UWB communication; a second short-range wireless communication circuit configured to be used for short-range wireless communication different from the UWB communication; a processor (for example, the processor 299 of FIG. 2) operatively connected to the first short-range wireless communication circuit and the second short-range wireless communication circuit; and a memory (for example, the memory 288 of FIG. 2) operatively connected to the processor. The memory may store instructions causing the processor to, when executed, recognize that a third event causing start of second UWB communication for positioning between a plurality of first external electronic devices and a second external electronic device is generated while the electronic device performs first UWB communication for positioning with the first external electronic devices through the first short-range wireless communication circuit, and transmit information used by the second external electronic device for the second UWB communication with the first external electronic devices to the second external electronic device through the second short-range wireless communication circuit in response to the generation of the third event.

The instructions may cause the processor to recognize that a fourth event causing the second external electronic device to stop the second UWB communication is generated, and transmit a message requesting termination of the second UWB communication to the second external electronic device through the second short-range wireless communication circuit in response to the generation of the fourth event.

The second external electronic device may be installed in an autonomous vehicle, and the instructions may cause the processor to recognize reception of a user input calling the autonomous vehicle through an input device of the electronic device as the generation of the third event, and recognize reception of a predetermined signal from the second external electronic device as the generation of the fourth event.

The second external electronic device may be installed in an autonomous vehicle, and the instructions may cause the processor to recognize reception of a user input calling the autonomous vehicle through an input device of the electronic device as the generation of the third event, measure a strength of an RF signal received from the second external electronic device through the second short-range wireless communication circuit, and recognize that the fourth event is generated when a signal strength value acquired through the measurement is smaller than a predetermined reference value.

The instructions may cause the processor to receive UWB signals from the first external electronic devices through the first UWB communication, measure a location of the electronic device, based on a time point at which the UWB signals are received and geographical location information of the first external electronic devices, and instruct the autonomous vehicle to drive to a a location of the electronic device by transmitting location information acquired through the measurement to the second external electronic device through the second short-range wireless communication circuit.

In various embodiments, a method of operating an electronic device may include: operations (for example, operations 630, 740, 840, and 1020) of recognizing that a first event causing the electronic device to perform a handover of positioning communication to a second external electronic device is generated while the electronic device performs first UWB communication for positioning with a plurality of first external electronic devices through a first short-range wireless communication circuit configured to be used for UWB communication; and operations (for example, operations 640, 750, 850, and 1030) of stopping positioning communication and transmitting information used by the second external electronic device for second UWB communication with the first external electronic devices to the second external electronic device through a second short-range wireless communication circuit configured to be used for short-range wireless communication different from the UWB communication in response to the generation of the first event.

The method may further include operations (for example, operations 650, 770, 860, and 1040) of recognizing that a second event causing resumption of the first UWB communication is generated while the second UWB communication is performed in the second external electronic device; and operations of transmitting a message requesting termination of the second UWB communication to the second external electronic device through the second short-range wireless communication circuit (for example, operations 661, 781, 871, and 1050) and resuming the first UWB communication in response to the generation of the second event (for example, operations 660, 780, 870, and 1050).

In various embodiments, a method of operating an electronic device may include an operation (for example, operation 940) of recognizing that a third event causing start of second UWB communication for positioning between a plurality of first external electronic devices and a second external electronic device is generated while the electronic device performs first UWB communication for positioning with the first external electronic devices through a first short-range wireless communication circuit configured to be used for UWB communication; and an operation (for example, operation 950) of transmitting information used by the second external electronic device for the second UWB communication with the first external electronic devices to the second external electronic device through a second short-range wireless communication circuit configured to be used for short-range wireless communication different from the UWB communication in response to the generation of the third event.

The method may further include an operation (for example, operation 990) of recognizing that a fourth event causing the second external electronic device to stop the second UWB communication is generated; and an operation (for example, operation 991) of transmitting a message requesting termination of the second UWB communication to the second external electronic device through the second short-range wireless communication circuit in response to the generation of the fourth event.

## Claims

1. An electronic device (101, 200) comprising:
a first wireless communication circuit (212) configured to perform ultra wide band, UWB, communication;
a second wireless communication circuit (211, 213) configured to perform wireless communication that is different from the UWB communication;
a memory (130, 288) configured to store instructions; and
a processor (120, 299) configured to execute the instructions to:
perform first UWB communication for position detection through a first UWB communication channel with a plurality of first external electronic devices (202, 410, 510) using the first wireless communication circuit,
detect a first event corresponding to a handover of the position detection from the electronic device to a second external electronic device (201, 420, 520) while the first UWB communication is performed, and
based on the first event, stop the position detection through the first UWB communication channel, and transmit communication information to the second external electronic device using the second wireless communication circuit,
wherein the communication information includes information received from the plurality of first external electronic devices to establish a channel for the first UWB communication and is used by the second external electronic device to perform a second UWB communication with the plurality of first external electronic devices.

2. The electronic device (101, 200) of claim 1, wherein the processor (120, 299) is further configured to execute the instructions to:
detect a second event corresponding to a resumption of the first UWB communication while the second UWB communication is performed, and
based on the second event, transmit a message requesting termination of the second UWB communication to the second external electronic device (201, 420, 520) using the second wireless communication circuit (211, 213), and resume the first UWB communication.

3. The electronic device (101, 200) of claim 2, wherein the second wireless communication circuit (211) comprises a BLUETOOTH low energy, BLE, communication circuit, and
wherein the processor (120, 299) is further configured to execute the instructions to:
establish a connection between the electronic device and the second external electronic device (201, 420, 520) using the BLE communication circuit,
detect the first event based on the establishing of the connection , and
detect the second event based on a termination of the connection.

4. The electronic device (101, 200) of claims 2 or 3, wherein the processor (120, 299) is further configured to execute the instructions to:
measure a strength of a radio frequency, RF, signal received from the second external electronic device (201, 420, 520) through the second wireless communication circuit (211, 213) to obtain a signal strength value,
based on the signal strength value being smaller than a predetermined reference value, detect the first event, and
based on the signal strength value being larger than the predetermined reference value while the second UWB communication is performed, detect the second event.

5. The electronic device (101, 200) of any one of claims 2 to 4, wherein the processor (120, 299) is further configured to execute the instructions to:
measure a strength of a radio frequency, RF, signal received from the second wireless communication circuit (211, 213) to obtain a signal strength value,
recognize a trend corresponding to a distance between the second external electronic device (201, 420, 520) and the electronic device, based on a change in the signal strength value,
based on the trend being a decreasing trend, detect the first event, and
based on the trend being an increasing trend, detect the second event.

6. The electronic device (101, 200) of any one of claims 1 to 5, wherein the processor (120, 299) is further configured to execute the instructions to:
receive UWB signals from the plurality of first external electronic devices (202, 410, 510) through the first UWB communication, and
determine a location of the electronic device, based on a time point at which the UWB signals are received and geographical location information of the plurality of first external electronic devices.

7. The electronic device (101, 200) of any one of claims 1 to 6, wherein the processor (120, 299) is further configured to execute the instructions to:
while the second UWB communication is performed, receive, from the second external electronic device (201, 420, 520) through the second wireless communication circuit (211, 213), time point information indicating a time point at which the second external electronic device received UWB signals, and
determine a location of the second external electronic device, based on the time point information and geographical location information of the plurality of first external electronic devices (202, 410, 510).

8. The electronic device (101, 200) of any one of claims 1 to 7, wherein the processor (120, 299) is further configured to execute the instructions to receive location information of the second external electronic device (201, 420, 520) from the second external electronic device through the second wireless communication circuit (211, 213) while the second UWB communication is performed.

9. The electronic device (101, 200) of any one of claims 2 to 5, wherein the memory (130, 288) is further configured to store an application, a service module, and UWB firmware, and
wherein the processor (120, 299) is further configured to execute the application to make a request for positioning communication to the UWB firmware through the service module,
wherein the processor is further configured to execute the UWB firmware to:
based on the request, configure a state of a channel for the first UWB communication as an active state to perform the first UWB communication using the first wireless communication circuit (212), and
transmit a message indicating that the state of the channel is configured as the active state to the application, and
wherein the processor is further configured to execute the service module to:
based on the first event, allow the UWB firmware to switch the state of the channel to an idle state by transmitting a message requesting termination of the first UWB communication to the UWB firmware, instruct the UWB firmware to not inform the application of the switching of the state of the channel to the idle state, and transmit a message requesting initiation of the second UWB communication to the second external electronic device (201, 420, 520) using the second wireless communication circuit (211, 213), and
based on the second event, allow the UWB firmware to switch the state of the channel to the active state by transmitting a message requesting resumption of the first UWB communication to the UWB firmware, and transmit the message requesting termination of the second UWB communication to the second external electronic device using the second wireless communication circuit (211, 213).

10. The electronic device (101, 200) of any one of claims 1 to 9, wherein, based on the first UWB communication channel being established, the processor (120, 299) is further configured to execute the instructions to insert information received from the plurality of first external electronic devices (202, 410, 510) into the communication information and transmit the communication information to the second external electronic device (201, 420, 520).

11. An electronic device (101, 200) comprising:
a first wireless communication circuit (212) configured to be used for ultra wide band, UWB, communication;
a second wireless communication circuit (211, 213) configured to be used for wireless communication different from the UWB communication;
a memory (130, 288) configured to store instructions; and
a processor (120, 299) configured to execute the instructions to:
perform first UWB communication for position detection through a first UWB communication channel with a plurality of first external electronic devices (202, 410, 510) using the first wireless communication circuit;
while the first UWB communication is performed, detect a third event corresponding to a start of a second UWB communication for the position detection between the plurality of first external electronic devices and a second external electronic device (201, 420, 520), and
based on the third event, transmit information used by the second external electronic device for the second UWB communication with the plurality of first external electronic devices to the second external electronic device through the second wireless communication circuit,
wherein the transmitted information includes information received from the plurality of first external electronic devices to establish a channel for the first UWB communication.

12. The electronic device (101, 200) of claim 11, wherein the processor (120, 299) is further configured to execute the instructions to:
recognise that a fourth event causing a termination of the second UWB communication has occurred at the second external electronic device (201, 420, 520), and
based on the fourth event, transmit a message requesting the termination of the second UWB communication to the second external electronic device through the second wireless communication circuit (211, 213).

13. The electronic device (101, 200) of claim 12, wherein the second external electronic device (201, 420, 520) is installed in an autonomous vehicle, and
wherein the processor (120, 299) is further configured to execute the instructions to:
detect the third event based on a user input calling the autonomous vehicle through an input device of the electronic device, and
detect the fourth event based on receiving a predetermined signal from the second external electronic device.

14. The electronic device (101, 200) of claims 12 or 13, wherein the second external electronic device (201, 420, 520) is installed in an autonomous vehicle, and
wherein the processor (120, 299) is further configured to execute the instructions to:
detect the third event based on receiving a user input calling the autonomous vehicle through an input device of the electronic device,
measure a strength of a radio-frequency, RF, signal received from the second external electronic device using the second wireless communication circuit (211, 213) to obtain a signal strength value, and
detect the fourth event based on the signal strength value being smaller than a predetermined reference value.

15. The electronic device (101, 200) of claims 13 or 14, wherein the processor (120, 299) is further configured to:
receive UWB signals from the plurality of first external electronic devices (202, 410, 510) through the first UWB communication,
determine a location of the electronic device, based on a time point at which the UWB signals are received and geographical location information of the plurality of first external electronic devices, and
transmit location information corresponding to the determined location to the second external electronic device (201, 420, 520) using the second wireless communication circuit (211, 213).

## Patentansprüche

1. Elektronische Vorrichtung (101, 200), umfassend:
eine erste Drahtloskommunikationsschaltung (212), die dazu konfiguriert ist, Ultrabreitband-, UWB-Kommunikation durchzuführen;
eine zweite Drahtloskommunikationsschaltung (211, 213), die dazu konfiguriert ist, Drahtloskommunikation durchzuführen, die sich von der UWB-Kommunikation unterscheidet;
einen Speicher (130, 288), der dazu konfiguriert ist, Anweisungen zu speichern; und
einen Prozessor (120, 299), der dazu konfiguriert ist, die Anweisungen zu Folgendem auszuführen:
Durchführen von erster UWB-Kommunikation zur Positionsdetektion über einen ersten UWB-Kommunikationskanal mit einer Vielzahl von ersten externen elektronischen Vorrichtungen (202, 410, 510) unter Verwendung der ersten Drahtloskommunikationsschaltung,
Detektieren eines ersten Ereignisses entsprechend einer Übergabe der Positionsdetektion von der elektronischen Vorrichtung an eine zweite externe elektronische Vorrichtung (201, 420, 520), während die erste UWB-Kommunikation durchgeführt wird, und
basierend auf dem ersten Ereignis, Stoppen der Positionsdetektion durch den ersten UWB-Kommunikationskanal und Übertragen von Kommunikationsinformationen an die zweite externe elektronische Vorrichtung unter Verwendung der zweiten Drahtloskommunikationsschaltung,
wobei die Kommunikationsinformationen Informationen beinhalten, die von der Vielzahl von ersten externen elektronischen Vorrichtungen empfangen werden, um einen Kanal für die erste UWB-Kommunikation einzurichten, und durch die zweite externe elektronische Vorrichtung verwendet werden, um eine zweite UWB-Kommunikation mit der Vielzahl von ersten externen elektronischen Vorrichtungen durchzuführen.

2. Elektronische Vorrichtung (101, 200) nach Anspruch 1, wobei der Prozessor (120, 299) ferner dazu konfiguriert ist, die Anweisungen zu Folgendem auszuführen:
Detektieren eines zweiten Ereignisses entsprechend einer Wiederaufnahme der ersten UWB-Kommunikation, während die zweite UWB-Kommunikation durchgeführt wird, und
basierend auf dem zweiten Ereignis, Übertragen einer Nachricht, die Beendigung der zweiten UWB-Kommunikation anfordert, an die zweite externe elektronische Vorrichtung (201, 420, 520) unter Verwendung der zweiten Drahtloskommunikationsschaltung (211, 213) und Wiederaufnehmen der ersten UWB-Kommunikation.

3. Elektronische Vorrichtung (101, 200) nach Anspruch 2, wobei die zweite Drahtloskommunikationsschaltung (211) eine BLUETOOTH-Niedrigenergie-, BLE-Kommunikationsschaltung umfasst, und
wobei der Prozessor (120, 299) ferner dazu konfiguriert ist, die Anweisungen zu Folgendem auszuführen:
Einrichten einer Verbindung zwischen der elektronischen Vorrichtung und der zweiten externen elektronischen Vorrichtung (201, 420, 520) unter Verwendung der BLE-Kommunikationsschaltung,
Detektieren des ersten Ereignisses basierend auf dem Einrichten der Verbindung, und
Detektieren des zweiten Ereignisses basierend auf einer Beendigung der Verbindung.

4. Elektronische Vorrichtung (101, 200) nach Anspruch 2 oder 3, wobei der Prozessor (120, 299) ferner dazu konfiguriert ist, die Anweisungen zu Folgendem auszuführen:
Messen einer Stärke eines Hochfrequenz-, HF-Signals, das von der zweiten externen elektronischen Vorrichtung (201, 420, 520) über die zweite Drahtloskommunikationsschaltung (211, 213) empfangen wird, um einen Signalstärkewert zu erhalten,
basierend darauf, dass der Signalstärkewert kleiner als ein vorbestimmter Referenzwert ist, Detektieren des ersten Ereignisses, und
basierend darauf, dass der Signalstärkewert größer als der vorbestimmte Referenzwert ist, während die zweite UWB-Kommunikation durchgeführt wird, Detektieren des zweiten Ereignisses.

5. Elektronische Vorrichtung (101, 200) nach einem der Ansprüche 2 bis 4, wobei der Prozessor (120, 299) ferner dazu konfiguriert ist, die Anweisungen zu Folgendem auszuführen:
Messen einer Stärke eines Hochfrequenz-, HF-Signals, das von der zweiten Drahtloskommunikationsschaltung (211, 213) empfangen wird, um einen Signalstärkewert zu erhalten,
Erkennen eines Trends entsprechend einer Entfernung zwischen der zweiten externen elektronischen Vorrichtung (201, 420, 520) und der elektronischen Vorrichtung, basierend auf einer Änderung des Signalstärkewertes,
basierend darauf, dass der Trend ein abnehmender Trend ist, Detektieren des ersten Ereignisses, und
basierend darauf, dass der Trend ein zunehmender Trend ist, Detektieren des zweiten Ereignisses.

6. Elektronische Vorrichtung (101, 200) nach einem der Ansprüche 1 bis 5, wobei der Prozessor (120, 299) ferner dazu konfiguriert ist, die Anweisungen zu Folgendem auszuführen:
Empfangen von UWB-Signalen von der Vielzahl von ersten externen elektronischen Vorrichtungen (202, 410, 510) über die erste UWB-Kommunikation, und
Bestimmen eines Standortes der elektronischen Vorrichtung basierend auf einem Zeitpunkt, zu dem die UWB-Signale empfangen werden, und geografischen Standortinformationen der Vielzahl von ersten externen elektronischen Vorrichtungen.

7. Elektronische Vorrichtung (101, 200) nach einem der Ansprüche 1 bis 6, wobei der Prozessor (120, 299) ferner dazu konfiguriert ist, die Anweisungen zu Folgendem auszuführen:
während die zweite UWB-Kommunikation durchgeführt wird, Empfangen, von der zweiten externen elektronischen Vorrichtung (201, 420, 520) über die zweite Drahtloskommunikationsschaltung (211, 213), von Zeitpunktinformationen, die einen Zeitpunkt angeben, zu dem die zweite externe elektronische Vorrichtung UWB-Signale empfangen hat, und
Bestimmen eines Standortes der zweiten externen elektronischen Vorrichtung basierend auf den Zeitpunktinformationen und geografischen Standortinformationen der Vielzahl von ersten externen elektronischen Vorrichtungen (202, 410, 510).

8. Elektronische Vorrichtung (101, 200) nach einem der Ansprüche 1 bis 7, wobei der Prozessor (120, 299) ferner dazu konfiguriert ist, die Anweisungen auszuführen, um Standortinformationen der zweiten externen elektronischen Vorrichtung (201, 420, 520) von der zweiten externen elektronischen Vorrichtung über die zweite Drahtloskommunikationsschaltung (211, 213) zu empfangen, während die zweite UWB-Kommunikation durchgeführt wird.

9. Elektronische Vorrichtung (101, 200) nach einem der Ansprüche 2 bis 5, wobei der Speicher (130, 288) ferner dazu konfiguriert ist, eine Anwendung, ein Servicemodul und UWB-Firmware zu speichern, und
wobei der Prozessor (120, 299) ferner dazu konfiguriert ist, die Anwendung auszuführen, um eine Anforderung zur Positionierungskommunikation an die UWB-Firmware über das Servicemodul zu stellen,
wobei der Prozessor ferner dazu konfiguriert ist, die UWB-Firmware zu Folgendem auszuführen:
basierend auf der Anforderung, Konfigurieren eines Zustands eines Kanals für die erste UWB-Kommunikation als einen aktiven Zustand, um die erste UWB-Kommunikation unter Verwendung der ersten Drahtloskommunikationsschaltung (212) durchzuführen, und
Übertragen einer Nachricht, die angibt, dass der Zustand des Kanals als der aktive Zustand konfiguriert ist, an die Anwendung, und
wobei der Prozessor ferner dazu konfiguriert ist, das Servicemodul zu Folgendem auszuführen:
basierend auf dem ersten Ereignis, Erlauben der UWB-Firmware, den Zustand des Kanals in einen Ruhezustand zu schalten, indem eine Nachricht, die Beendigung der ersten UWB-Kommunikation anfordert, an die UWB-Firmware übertragen wird, Anweisen der UWB-Firmware, die Anwendung nicht über das Schalten des Zustands des Kanals in den Ruhezustand zu informieren, und Übertragen einer Nachricht, die Initiierung der zweiten UWB-Kommunikation anfordert, an die zweite externe elektronische Vorrichtung (201, 420, 520) unter Verwendung der zweiten Drahtloskommunikationsschaltung (211, 213), und
basierend auf dem zweiten Ereignis, Erlauben, dass die UWB-Firmware den Zustand des Kanals in den aktiven Zustand schaltet, indem eine Nachricht, die Wiederaufnahme der ersten UWB-Kommunikation anfordert, an die UWB-Firmware übertragen wird, und Übertragen der Nachricht, die Beendigung der zweiten UWB-Kommunikation anfordert, an die zweite externe elektronische Vorrichtung unter Verwendung der zweiten Drahtloskommunikationsschaltung (211, 213).

10. Elektronische Vorrichtung (101, 200) nach einem der Ansprüche 1 bis 9, wobei basierend darauf, dass der erste UWB-Kommunikationskanal eingerichtet ist, der Prozessor (120, 299) ferner dazu konfiguriert ist, die Anweisungen auszuführen, um Informationen, die von der Vielzahl von ersten externen elektronischen Vorrichtungen (202, 410, 510) empfangen werden, in die Kommunikationsinformationen einzufügen und die Kommunikationsinformationen an die zweite externe elektronische Vorrichtung (201, 420, 520) zu übertragen.

11. Elektronische Vorrichtung (101, 200), umfassend:
eine erste Drahtloskommunikationsschaltung (212), die dazu konfiguriert ist, für Ultrabreitband-, UWB-Kommunikation verwendet zu werden;
eine zweite Drahtloskommunikationsschaltung (211, 213), die dazu konfiguriert ist, für Drahtloskommunikation verwendet zu werden, die sich von der UWB-Kommunikation unterscheidet;
einen Speicher (130, 288), der dazu konfiguriert ist, Anweisungen zu speichern; und
einen Prozessor (120, 299), der dazu konfiguriert ist, die Anweisungen zu Folgendem auszuführen:
Durchführen von erster UWB-Kommunikation für Positionsdetektion durch einen ersten UWB-Kommunikationskanal mit einer Vielzahl von ersten externen elektronischen Vorrichtungen (202, 410, 510) unter Verwendung der ersten Drahtloskommunikationsschaltung;
während die erste UWB-Kommunikation durchgeführt wird, Detektieren eines dritten Ereignisses entsprechend einem Start einer zweiten UWB-Kommunikation für die Positionsdetektion zwischen der Vielzahl von ersten externen elektronischen Vorrichtungen und einer zweiten externen elektronischen Vorrichtung (201, 420, 520), und
basierend auf dem dritten Ereignis, Übertragen von Informationen, die durch die zweite externe elektronische Vorrichtung für die zweite UWB-Kommunikation mit der Vielzahl von ersten externen elektronischen Vorrichtungen verwendet werden, an die zweite externe elektronische Vorrichtung über die zweite Drahtloskommunikationsschaltung,
wobei die übertragenen Informationen Informationen beinhalten, die von der Vielzahl von ersten externen elektronischen Vorrichtungen empfangen werden, um einen Kanal für die erste UWB-Kommunikation einzurichten.

12. Elektronische Vorrichtung (101, 200) nach Anspruch 11, wobei der Prozessor (120, 299) ferner dazu konfiguriert ist, die Anweisungen zu Folgendem auszuführen:
Erkennen, dass ein viertes Ereignis, das eine Beendigung der zweiten UWB-Kommunikation bewirkt, an der zweiten externen elektronischen Vorrichtung (201, 420, 520) aufgetreten ist, und
basierend auf dem vierten Ereignis, Übertragen einer Nachricht, welche die Beendigung der zweiten UWB-Kommunikation anfordert, an die zweite externe elektronische Vorrichtung über die zweite Drahtloskommunikationsschaltung (211, 213).

13. Elektronische Vorrichtung (101, 200) nach Anspruch 12, wobei die zweite externe elektronische Vorrichtung (201, 420, 520) in einem autonomen Fahrzeug installiert ist, und
wobei der Prozessor (120, 299) ferner dazu konfiguriert ist, die Anweisungen zu Folgendem auszuführen:
Detektieren des dritten Ereignisses basierend auf einer Benutzereingabe, die das autonome Fahrzeug über eine Eingabevorrichtung der elektronischen Vorrichtung anruft, und
Detektieren des vierten Ereignisses basierend auf dem Empfangen eines vorbestimmten Signals von der zweiten externen elektronischen Vorrichtung.

14. Elektronische Vorrichtung (101, 200) nach Anspruch 12 oder 13, wobei die zweite externe elektronische Vorrichtung (201, 420, 520) in einem autonomen Fahrzeug installiert ist, und
wobei der Prozessor (120, 299) ferner dazu konfiguriert ist, die Anweisungen zu Folgendem auszuführen:
Detektieren des dritten Ereignisses basierend auf dem Empfangen einer Benutzereingabe, die das autonome Fahrzeug über eine Eingabevorrichtung der elektronischen Vorrichtung anruft,
Messen einer Stärke eines Hochfrequenz-, HF-Signals, das von der zweiten externen elektronischen Vorrichtung empfangen wird, unter Verwendung der zweiten Drahtloskommunikationsschaltung (211, 213), um einen Signalstärkewert zu erhalten, und
Detektieren des vierten Ereignisses basierend darauf, dass der Signalstärkewert kleiner als ein vorbestimmter Referenzwert ist.

15. Elektronische Vorrichtung (101, 200) nach Anspruch 13 oder 14, wobei der Prozessor (120, 299) ferner zu Folgendem konfiguriert ist:
Empfangen von UWB-Signalen von der Vielzahl von ersten externen elektronischen Vorrichtungen (202, 410, 510) über die erste UWB-Kommunikation,
Bestimmen eines Standortes der elektronischen Vorrichtung basierend auf einem Zeitpunkt, zu dem die UWB-Signale empfangen werden, und geografischen Standortinformationen der Vielzahl von ersten externen elektronischen Vorrichtungen, und
Übertragen von Standortinformationen entsprechend dem bestimmten Standort an die zweite externe elektronische Vorrichtung (201, 420, 520) unter Verwendung der zweiten Drahtloskommunikationsschaltung (211, 213).

## Revendications

1. Dispositif électronique (101, 200) comprenant :
un premier circuit de communication sans fil (212) configuré pour effectuer une communication à bande ultralarge, UWB ;
un second circuit de communication sans fil (211, 213) configuré pour effectuer une communication sans fil qui est différente de la communication UWB ;
une mémoire (130, 288) configurée pour stocker des instructions ; et
un processeur (120, 299) configuré pour exécuter les instructions pour :
effectuer une première communication UWB pour la détection de position par l'intermédiaire d'un premier canal de communication UWB avec une pluralité de premiers dispositifs électroniques externes (202, 410, 510) à l'aide du premier circuit de communication sans fil,
détecter un premier événement correspondant à un transfert de la détection de position du dispositif électronique à un second dispositif électronique externe (201, 420, 520) pendant que la première communication UWB est effectuée, et
sur la base du premier événement, arrêter la détection de position par l'intermédiaire du premier canal de communication UWB, et transmettre des informations de communication au second dispositif électronique externe à l'aide du second circuit de communication sans fil,
dans lequel les informations de communication comprennent des informations reçues de la pluralité de premiers dispositifs électroniques externes pour établir un canal pour la première communication UWB et sont utilisées par le second dispositif électronique externe pour effectuer une seconde communication UWB avec la pluralité de premiers dispositifs électroniques externes.

2. Dispositif électronique (101, 200) de la revendication 1, dans lequel le processeur (120, 299) est en outre configuré pour exécuter les instructions pour :
détecter un deuxième événement correspondant à une reprise de la première communication UWB pendant que la seconde communication UWB est effectuée, et
sur la base du deuxième événement, transmettre un message demandant la terminaison de la seconde communication UWB au second dispositif électronique externe (201, 420, 520) à l'aide du second circuit de communication sans fil (211, 213), et reprendre la première communication UWB.

3. Dispositif électronique (101, 200) de la revendication 2, dans lequel le second circuit de communication sans fil (211) comprend un circuit de communication BLUETOOTH basse énergie, BLE, et
dans lequel le processeur (120, 299) est en outre configuré pour exécuter les instructions pour :
établir une connexion entre le dispositif électronique et le second dispositif électronique externe (201, 420, 520) à l'aide du circuit de communication BLE,
détecter le premier événement sur la base de l'établissement de la connexion, et
détecter le deuxième événement sur la base d'une terminaison de la connexion.

4. Dispositif électronique (101, 200) des revendications 2 ou 3, dans lequel le processeur (120, 299) est en outre configuré pour exécuter les instructions pour :
mesurer une intensité d'un signal radiofréquence, RF, reçu du second dispositif électronique externe (201, 420, 520) par l'intermédiaire du second circuit de communication sans fil (211, 213) afin d'obtenir une valeur d'intensité de signal,
détecter le premier événement, sur la base du fait que la valeur d'intensité de signal est inférieure à une valeur de référence prédéterminée, et
détecter le deuxième événement, sur la base du fait que la valeur d'intensité de signal est supérieure à la valeur de référence prédéterminée pendant que la seconde communication UWB est effectuée.

5. Dispositif électronique (101, 200) de l'une quelconque des revendications 2 à 4, dans lequel le processeur (120, 299) est en outre configuré pour exécuter les instructions pour :
mesurer une intensité d'un signal radiofréquence, RF, reçu du second circuit de communication sans fil (211, 213) afin d'obtenir une valeur d'intensité de signal,
reconnaître une tendance correspondant à une distance entre le second dispositif électronique externe (201, 420, 520) et le dispositif électronique, sur la base d'un changement de la valeur d'intensité de signal,
détecter le premier événement, sur la base du fait que la tendance est une tendance décroissante, et
détecter le deuxième événement, sur la base du fait que la tendance est une tendance croissante.

6. Dispositif électronique (101, 200) de l'une quelconque des revendications 1 à 5, dans lequel le processeur (120, 299) est en outre configuré pour exécuter les instructions pour :
recevoir des signaux UWB provenant de la pluralité de premiers dispositifs électroniques externes (202, 410, 510) par l'intermédiaire de la première communication UWB, et
déterminer un emplacement du dispositif électronique, sur la base d'un instant auquel les signaux UWB sont reçus et d'informations d'emplacement géographique de la pluralité de premiers dispositifs électroniques externes.

7. Dispositif électronique (101, 200) de l'une quelconque des revendications 1 à 6, dans lequel le processeur (120, 299) est en outre configuré pour exécuter les instructions pour :
pendant que la seconde communication UWB est effectuée, recevoir, du second dispositif électronique externe (201, 420, 520) par l'intermédiaire du second circuit de communication sans fil (211, 213), des informations d'instant indiquant un instant auquel le second dispositif électronique externe a reçu des signaux UWB, et
déterminer un emplacement du second dispositif électronique externe, sur la base des informations d'instant et des informations d'emplacement géographique de la pluralité de premiers dispositifs électroniques externes (202, 410, 510).

8. Dispositif électronique (101, 200) de l'une quelconque des revendications 1 à 7, dans lequel le processeur (120, 299) est en outre configuré pour exécuter les instructions pour recevoir des informations d'emplacement du second dispositif électronique externe (201, 420, 520) provenant du second dispositif électronique externe par l'intermédiaire du second circuit de communication sans fil (211, 213) pendant que la seconde communication UWB est effectuée.

9. Dispositif électronique (101, 200) de l'une quelconque des revendications 2 à 5, dans lequel la mémoire (130, 288) est en outre configurée pour stocker une application, un module de service et un micrologiciel UWB, et
dans lequel le processeur (120, 299) est en outre configuré pour exécuter l'application afin de formuler une demande de communication de positionnement auprès du micrologiciel UWB par l'intermédiaire du module de service,
dans lequel le processeur est en outre configuré pour exécuter le micrologiciel UWB pour :
sur la base de la demande, configurer un état d'un canal pour la première communication UWB en tant qu'état actif afin d'effectuer la première communication UWB à l'aide du premier circuit de communication sans fil (212), et
transmettre à l'application un message indiquant que l'état du canal est configuré comme état actif, et
dans lequel le processeur est en outre configuré pour exécuter le module de service pour :
sur la base du premier événement, permettre au micrologiciel UWB de faire passer l'état du canal à un état inactif en transmettant au micrologiciel UWB un message demandant la terminaison de la première communication UWB, donner instruction au micrologiciel UWB de ne pas informer l'application du passage de l'état du canal à l'état inactif, et transmettre un message demandant l'initiation de la seconde communication UWB au second dispositif électronique externe (201, 420, 520) à l'aide du second circuit de communication sans fil (211, 213), et
sur la base du deuxième événement, permettre au micrologiciel UWB de faire passer l'état du canal à l'état actif en transmettant au micrologiciel UWB un message demandant la reprise de la première communication UWB, et transmettre le message demandant la terminaison de la seconde communication UWB au second dispositif électronique externe à l'aide du second circuit de communication sans fil (211, 213).

10. Dispositif électronique (101, 200) de l'une quelconque des revendications 1 à 9, dans lequel, sur la base de l'établissement du premier canal de communication UWB, le processeur (120, 299) est en outre configuré pour exécuter les instructions pour insérer des informations reçues de la pluralité de premiers dispositifs électroniques externes (202, 410, 510) dans les informations de communication et transmettre les informations de communication au second dispositif électronique externe (201, 420, 520).

11. Dispositif électronique (101, 200) comprenant :
un premier circuit de communication sans fil (212) configuré pour être utilisé pour une communication à bande ultralarge, UWB ;
un second circuit de communication sans fil (211, 213) configuré pour être utilisé pour une communication sans fil différente de la communication UWB ;
une mémoire (130, 288) configurée pour stocker des instructions ; et
un processeur (120, 299) configuré pour exécuter les instructions pour :
effectuer une première communication UWB pour la détection de position par l'intermédiaire d'un premier canal de communication UWB avec une pluralité de premiers dispositifs électroniques externes (202, 410, 510) à l'aide du premier circuit de communication sans fil ;
pendant que la première communication UWB est effectuée, détecter un troisième événement correspondant à un début d'une seconde communication UWB pour la détection de position entre la pluralité de premiers dispositifs électroniques externes et un second dispositif électronique externe (201, 420, 520), et
sur la base du troisième événement, transmettre au second dispositif électronique externe, par l'intermédiaire du second circuit de communication sans fil, des informations utilisées par le second dispositif électronique externe pour la seconde communication UWB avec la pluralité de premiers dispositifs électroniques externes,
dans lequel les informations transmises comprennent des informations reçues de la pluralité de premiers dispositifs électroniques externes pour établir un canal pour la première communication UWB.

12. Dispositif électronique (101, 200) de la revendication 11, dans lequel le processeur (120, 299) est en outre configuré pour exécuter les instructions pour :
reconnaître qu'un quatrième événement provoquant la terminaison de la seconde communication UWB s'est produit au niveau du second dispositif électronique externe (201, 420, 520), et
sur la base du quatrième événement, transmettre un message demandant la terminaison de la seconde communication UWB au second dispositif électronique externe par l'intermédiaire du second circuit de communication sans fil (211, 213).

13. Dispositif électronique (101, 200) de la revendication 12, dans lequel le second dispositif électronique externe (201, 420, 520) est installé dans un véhicule autonome, et
dans lequel le processeur (120, 299) est en outre configuré pour exécuter les instructions pour :
détecter le troisième événement sur la base d'une entrée utilisateur appelant le véhicule autonome par l'intermédiaire d'un dispositif d'entrée du dispositif électronique, et
la détection du quatrième événement sur la base de la réception d'un signal prédéterminé provenant du second dispositif électronique externe.

14. Dispositif électronique (101, 200) des revendications 12 ou 13, dans lequel le second dispositif électronique externe (201, 420, 520) est installé dans un véhicule autonome, et
dans lequel le processeur (120, 299) est en outre configuré pour exécuter les instructions pour :
détecter le troisième événement sur la base de la réception d'une entrée utilisateur appelant le véhicule autonome par l'intermédiaire d'un dispositif d'entrée du dispositif électronique,
mesurer une intensité d'un signal radiofréquence, RF, reçu provenant du second dispositif électronique externe à l'aide du second circuit de communication sans fil (211, 213) afin d'obtenir une valeur d'intensité de signal, et
détecter le quatrième événement sur la base du fait que la valeur d'intensité de signal est inférieure à une valeur de référence prédéterminée.

15. Dispositif électronique (101, 200) des revendications 13 ou 14, dans lequel le processeur (120, 299) est en outre configuré pour :
recevoir des signaux UWB provenant de la pluralité de premiers dispositifs électroniques externes (202, 410, 510) par l'intermédiaire de la première communication UWB,
déterminer un emplacement du dispositif électronique, sur la base d'un instant auquel les signaux UWB sont reçus et d'informations d'emplacement géographique de la pluralité de premiers dispositifs électroniques externes, et
transmettre des informations d'emplacement correspondant à l'emplacement déterminé au second dispositif électronique externe (201, 420, 520) à l'aide du second circuit de communication sans fil (211, 213).
